# EUROPEAN PATENT APPLICATION

(11) **EP 4 574 256 A1**
(43) Date of publication of application: **25.06.2025**
(21) Application number: 23866879.2
(22) Date of filing: 06.04.2023
(51) Int. Cl.: B01J 23/887, B01J 27/19, B01J 27/051

(54) **HYDROGENATION CATALYST AND PREPARATION METHOD THEREFOR AND USE THEREOF**

(30) Priority: 19.09.2022 CN 202211136689
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: JIANG, Shujiao, Dalian, Liaoning 116045 (CN); DING, Sijia, Dalian, Liaoning 116045 (CN); YUAN, Shenghua, Dalian, Liaoning 116045 (CN); GENG, Xinguo, Dalian, Liaoning 116045 (CN); YANG, Gang, Dalian, Liaoning 116045 (CN); ZHANG, Cheng, Dalian, Liaoning 116045 (CN); SUI, Baokuan, Dalian, Liaoning 116045 (CN)
(74) Representative: Hoffmann Eitle
(86) International application number: PCT/CN2023/086555
(87) International publication number: WO 2024/060582

(57) **Abstract**

Disclosed in the present invention are a hydrogenation catalyst and a preparation method therefor and a use thereof. The hydrogenation catalyst is a sulfided-state hydrogenation catalyst and comprises a carrier, an active component A, an active component B, and a modification aid component. The active component A is selected from at least one of metal elements of group VIII, the active component B is selected from at least one of metal elements of group VIB, and the modification aid component is selected from at least one of elements of groups IB, IIA, IIB, IIIA, and VIA. The hydrogenation catalyst is characterized by a TEM-EDS method, and the content of the modification aid component distributed in an A-B-S active phase region accounts for 60% to 98% of the total content of the modification aid component. The hydrogenation catalyst provided in the present invention has a good hydrogenation capability and stability.

## Description

### CROSS-REFERENCE TO RELATED APPLICATIONS

The application claims the benefit of the Chinese patent application No. "202211136689.1", filed on September 19, 2022, the content of which is specifically and entirely incorporated herein by reference.

### TECHNICAL FIELD

The invention pertains to the field of hydrogenation catalysts and relates to a hydrogenation catalyst and a preparation method therefor and a use thereof.

### BACKGROUND ART

The active phase currently used in resid hydroprocessing is mainly the Co(Ni)-Mo(W)-S type active phase, in order to favorably meet the various requirements, the active phase can be heteroatomically modified during the preparation process of catalyst to improve the operational performance of the catalyst.

CN101722039A discloses a hydrogenation catalyst and a preparation method thereof, wherein gallium and a rare earth metal element are introduced during the preparation process of the catalyst to modify the catalyst. The aid in the modification process is mainly aimed to modify the carrier, the modification treatment has a limited improvement effect, and may cause the serious migration phenomenon of active metals during the processing of heavy oil.

CN113559875A discloses a hydrogenation catalyst and a preparation method thereof, during the preparation process of a carrier, the additives phosphorus and magnesium are introduced, which serve to regulate the pore canal structure and pore canal diffusion of the catalyst. The method still mainly relies on carrier modification, the targeted modification of the active phase is not implemented, thus the hydrogenation catalyst lacks the adaptability to the hydroprocessing of some unconventional inferior feedstock.

CN101844081A discloses a preparation method for a selective hydrogenation catalyst, the zinc aid is introduced during the active metal impregnation process to enhance the hydrodesulfurization effect of the catalyst. The modification method has the defects that zinc and nickel cannot be simultaneously vulcanized, resulting in that many active phases are not modified by Zn, and the catalyst has insufficient desulfurization activity for treating inferior oil products, especially the resid having a high sulfur content.

### SUMMARY OF THE INVENTION

In order to overcome the defect in the prior art that the hydrogenation capability, feedstock oil adaptability, and stability of the hydrogenation catalysts need to be further improved, the present invention provides a hydrogenation catalyst and preparation method therefor and use thereof, the hydrogenation catalyst provided by the invention has desirable hydrogenation capability, and stability, and is suitable for the treatment of various types of feedstock oil.

The first aspect of the invention provides a hydrogenation catalyst, the hydrogenation catalyst is a sulfided-state hydrogenation catalyst and comprises a carrier, an active component A, an active component B, and a modification aid component, wherein the active component A is at least one selected from the metal elements of group VIII, the active component B is at least one selected from the metal elements of group VIB, and the modification aid component is at least one selected from the elements of groups IB, IIA, IIB, IIIA, and VIA;
wherein the hydrogenation catalyst is characterized by a TEM-EDS method, and the content of the modification aid component distributed in an A-B-S active phase region accounts for 60%-95%, preferably 75%-90% of the total content of the modification aid component.

The present invention provides a hydrogenation catalyst, wherein the content of the modification aid component distributed in an A-B-S active phase region is relatively high so that the modification aid component can favorably perform functions, effectively combining with the A-B-S active phase.

The present inventors have discovered in the research process that the prior art has mostly highlighted the problems of introducing the aid metal in the oxidation state hydrogenation catalyst, but they have found the defects such as the modification is not localized, the modification lacks pertinence, has poor performance and insufficient oil product adaptability and stability.

The second aspect of the invention provides a preparation method for the hydrogenation catalyst, the method comprises the following steps:
(1) performing sulfurization on an oxidation state hydrogenation catalyst to obtain a sulfided-state hydrogenation catalyst;
(2) carrying out a desulfurization treatment on the sulfided-state hydrogenation catalyst;
(3) subjecting treated catalyst obtained in step (2) and a material containing a modification aid component precursor to a contact reaction;
wherein the modification aid component is at least one selected from the elements of groups IB, IIA, IIB, IIIA, and VIA.

According to the preparation method of the hydrogenation catalyst provided by the present invention, the oxidation state hydrogenation catalyst is initially subjected to sulfurization and then subjected to a desulfurization treatment, so that the metal active phase to be modified is in a specific state of desulfurization and high activity, and the exposed active metals are disposed at the edge and outer layer of the active phase, the three-coordinate sulfur atoms and the stable A-B-S crystal structure in the hydrogenation active phase can be efficiently retained, the modification aid component can contact with the outer layer metal phase of the active phase more efficiently, such that the modification aid component (denoted as R) forms a R-A-B-S combined and mixed active phase with A, B and S in the obtained hydrogenation catalyst, thereby achieving the objective of modification.

The third aspect of the invention provides a use of the hydrogenation catalyst according to the first aspect or the hydrogenation catalyst produced with the preparation method according to the second aspect in the hydrogenation of petroleum products.

When the catalyst provided by the present invention is used in the hydrogenation of petroleum products, it has desirable hydroprocessing capability and stability. The selection of the various modification aid components also provides the catalyst provided by the invention with additional advantages, such as selectivity.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

Unless otherwise specified in the invention, the percentages and percentage contents are measured by mass.

The first aspect of the invention provides a hydrogenation catalyst, the hydrogenation catalyst is a sulfided-state hydrogenation catalyst and comprises a carrier, an active component A, an active component B, and a modification aid component, wherein the active component A is at least one selected from the metal elements of group VIII, the active component B is at least one selected from the metal elements of group VIB, and the modification aid component is at least one selected from the elements of groups IB, IIA, IIB, IIIA, and VIA;

wherein the hydrogenation catalyst is characterized by a TEM-EDS method, and the content of the modification aid component distributed in an A-B-S active phase region accounts for 60%-98% of the total content of the modification aid component.

According to the invention, the A-B-S active phase has the conventional definitions in the technical field of hydrogenation catalyst, the A-B-S active phase refers to an effective active center of the hydrogenation catalyst, the concept was proposed by Haldor Topsoe Corporation in 1984.

In the invention, the content of the modification aid component distributed in an A-B-S active phase region relative to the total content of the modification aid component is denoted by the ratio R-A-B-S/Rₜₒₜₐₗ, where R represents the modification aid component, and R-A-B-S represents the content of the modification aid component distributed in an A-B-S active phase region, Rₜₒₜₐₗ represents the total content of the modification aid component in the catalyst. The ratio R-A-B-S/Rₜₒₜₐₗ in the invention is characterized by the TEM-EDS (Transmission Electron Microscope - Energy Dispersive X-ray Spectroscopy) method, using the instrument with a model JEM2200FS type transmission electron microscopy manufactured by the JEOL Ltd. in Japan, equipped with scanning transmission accessories and the X-ray spectroscopy accessories manufactured by the EDAX Corporation in the United States of America (USA). The acceleration voltage of the transmission electron microscopy is 200KV, in the Scanning Transmission Electron Microscopy (STEM) mode, the diaphragm of the converging lens is 2, and the Spote size is 0.5nm. The measurement process is as follows: grinding the catalyst particles, using suspension method for preparing a catalyst sample, placing 0.1g of the catalyst sample in a container with a volume of 2mL, adding anhydrous ethanol and performing the ultrasonic dispersion, extracting the supernatant, using a dropper and taking 2-3 droplets, dropping the droplets onto a sample net having a diameter of 3mm, drying the sample net to obtain the sample to be tested, observing and analyzing the sample to be tested with the TEM, carrying out the statistics in combination with the EDS on the content and distribution of the modification aid component in the active phase region observed by the TEM, to obtain the ratio of the content of the modification aid component distributed in an A-B-S active phase region relative to the total content of the modification aid component (denoted by R-A-B-S/Rₜₒₜₐₗ) calculated in terms of the corresponding peak areas of the modification aid component, the ratio R-A-B-S/Rₜₒₜₐₗ in the invention is obtained by selecting 40 TEM images and averaging the data derived from the images in combination with the EDS analysis.

According to a preferred embodiment of the invention, the content of the modification aid component distributed in an A-B-S active phase region accounts for 75%-98% of the total content of the modification aid component, for example, the percentage is 75%, 78%, 80%, 82%, 84%, 86%, 88%, 90%, or any value within the range consisting of any two of the numerical values.

In the prior art, the modification aid component is generally introduced by an oxidation state catalyst and then subjected to sulfurization. The prior art adopts a mode of initially combining and then forming an active phase, the percentage of the modification aid component that really performs an effective function is relatively small. The present inventors have discovered in research that the ratio of the content of the modification aid component distributed in the Ni-Mo-S active phase region relative to the total content of the modification aid component is generally below 30% in the prior art.

According to a preferred embodiment of the invention, the sulfur content at the edge and corner sites in an A-B-S active phase accounts for 6.0% or less, preferably 0.5%-4.5% of the total sulfur content of the A-B-S active phase, the percentage is for example 0.5%, 1%, 2%, 3%, 4%, 4.5%, or any value within the range consisting of any two of the numerical values. By using the preferred embodiment, the content of sulfur at the edge and corner sites is moderately reduced, facilitating exposure to the outside of the empty orbits of the active component atoms, enhancing the adsorption of the active phase to the modification aid component organics during the metal modification process, thereby allowing the better immobilization of the modification aid component on the edge and corner sites of the active phase.

The content of sulfur at the edge and corner sites of the A-B-S active phase relative to the total sulfur content of the A-B-S active phase is denoted by the ratio S_{edge and} corner sites /Sₜₒₜₐₗ, wherein S_{edge and corner sites} represents the content of sulfur at the edge and corner sites of the A-B-S active phase, Sₜₒₜₐₗ represents the total sulfur content of the A-B-S active phase. The ratio S_{edge and corner sites} /Sₜₒₜₐₗ of the invention is characterized by the TEM-EDS (Transmission Electron Microscope - Energy Dispersive X-ray Spectroscopy) method, and the type of instrument in use is the same as that mentioned above. The measurement process is as follows: grinding the catalyst particles, using the suspension method for preparing a catalyst sample, placing 0.1g of the catalyst sample in a container with a volume of 2mL, adding anhydrous ethanol, and performing the ultrasonic dispersion, extracting the supernatant, using a dropper and taking 2-3 droplets, dropping the droplets onto a sample net having a diameter of 3mm, drying the sample net to obtain the sample to be tested, observing and analyzing the sample to be tested with the TEM, carrying out the statistics in combination with the EDS on the content and distribution of the sulfur content in the active phase region observed by the TEM. The present invention defines the place with a distance less than 1nm from the edge terminal of the active phase as the edge and corner sites of the active phase. Any one of the active phases observed by the TEM is selected, and the sulfur content at the place with a distance less than 1nm from the edge terminal of the active phase and the sulfur content in the active phase are statistically analyzed in combination with the EDS, to obtain the ratio of the content of sulfur at the edge and corner sites of the A-B-S active phase relative to the total sulfur content of the A-B-S active phase (denoted by S_{edge and corner sites} /Sₜₒₜₐₗ ). The ratio S_{edge and corner sites} /Sₜₒₜₐₗ in the invention is obtained by selecting 40 TEM images and averaging the data derived from the images in combination with the EDS analysis.

In the modification method of the Ni-Mo-S type hydrogenation active phase in the prior art, wherein the auxiliary elements have been introduced when the active metal is in the oxide precursor state, it is difficult to load the aid elements with high selectivity on the active phase during the sulfurization process of the active metal, the direct modification effect is poor. In addition, the sulfided-state catalyst provided in the prior art has a large value of the ratio S_{edge and corner sites} /Sₜₒₜₐₗ.

According to the present invention, the content of the active component A calculated in terms of the element is preferably within the range of 1-10%, more preferably within the range of 1.5-6%, such as 1.5%, 2%, 2.5%, 3%, 3.5%, 4%, 4.5%, 5%, 5.5%, 6%, or any value within the range consisting of any two of the numerical values, based on the mass of the hydrogenation catalyst; and the content of the active component B calculated in terms of element is within the range of 6-24%, preferably within the range of 8-18%, such as 8%, 9%, 10%, 12%, 14%, 16%, 18%, or any value within the range consisting of any two of the numerical values, based on the mass of the hydrogenation catalyst.

According to the present invention, it is preferred that the content of the modification aid component calculated in terms of the element is within the range of 0.2-4%, more preferably within the range of 0.8-4%, such as 0.8%, 1%, 1.5%, 2%, 2.5%, 3%, 3.5%, 4%, or any value within the range consisting of any two of the numerical values, based on the mass of the hydrogenation catalyst. The invention can efficiently improve the performance of the hydrogenation catalyst by using less modification aid components.

According to the present invention, the content of sulfur element is preferably within the range of 3-20%, more preferably within the range of 4-15%, such as 4%, 5%, 6%, 7%, 8%, 9%, 10%, 11%, 12%, 13%, 14%, 15%, or any value within the range consisting of any two of the numerical values, based on the mass of the hydrogenation catalyst.

In the present invention, the contents of the active component A, the active component B, the modification aid component, and the sulfur element in the hydrogenation catalyst are measured through the Inductively Coupled Plasma (ICP), and the device in use is OPTIMA 7000 DV type atomic emission spectrometer manufactured by PE Corporation. 0.1g of sample is dissolved in a mixed solution of HCl, HNO₃, and HF in a volume ratio of 3: 1: 0.5, the mixed solution is then diluted with deionized water to a certain volume, such that the content of the element to be measured in the solution is within the range of 1-10 ppm, the measurement is subsequently performed.

According to a particularly preferred embodiment of the invention, the content of the active component A calculated in terms of the element is within the range of 1-10%, preferably within the range of 1.5-6%, the content of the active component B calculated in terms of element is within the range of 6-24%, preferably within the range of 8-18%; the content of the modification aid component calculated in terms of element is within the range of 0.2-4%, more preferably within the range of 0.8-4%; the content of sulfur element is within the range of 3-20%, more preferably within the range of 4-15%; the content of carrier is within the range of 42-89%, preferably within the range of 57-85%, based on the mass of the hydrogenation catalyst.

The hydrogenation catalyst provided by the invention may comprise other components, it can be known that the sum of the contents of all components in the hydrogenation catalyst is 100%.

According to a preferred embodiment of the invention, the active component A is Co and/or Ni, and the active component B is Mo and/or W.

According to the present invention, preferably, the active component A is Ni, and the active component B is Mo. The use of the catalyst of the preferred embodiment facilitates the hydroprocessing of heavy oils.

The invention has a wide range of options for the specific types of modification aid components, each of the types of modification aid components can achieve the objectives of improving the hydrogenation capability and stability of the hydrogenation catalyst in the invention. In addition, the selection of specific types of modification aid components allows the hydrogenation catalyst to exhibit additional advantages and is more suitable for the treatment of specific petroleum products.

Preferably, the modification aid component is at least one selected from the group consisting of Cu, Ag, Au, Mg, Ca, Zn, Cd, Ga, and Se, more preferably at least one selected from the group consisting of Ag, Mg, Zn, Ga, and Se.

The present inventors have discovered in the course of their research when Ag is selected as the modification aid component, it has desirable stability in a low-sulfur environment, is particularly suitable for long-term processing of feedstock oil with low-sulfur content or free of sulfur (including but not limited to at least one of biodiesel, Fischer-Tropsch synthesis oil, low-temperature coal tar, etc.), and the catalyst has desired hydrogenation saturation selectivity for aromatic hydrocarbons and other compounds.

The present inventors have discovered in the course of their research that when Mg is selected as the modification aid component, the catalyst has desirable hydrogenation selectivity for olefins, and is particularly suitable for processing feedstock oil with a high content of olefins, such as at least one of coal-made synthetic oil, coal tar, ebullated bed resid hydrogenation tail oil, ethylene coke, etc.

The present inventors have discovered in the course of their research that when Zn is selected as the modification aid component, the catalyst has a good hydrodesulfurization selectivity, and is particularly suitable for the hydrodesulfurization treatment of heavy oils, such as deasphalted oil.

The present inventors have discovered in the course of their research that when Ga is selected as the modification aid component, the catalyst has a desirable hydrodenitrogenation selectivity, and it is particularly suitable for the hydrodenitrogenation treatment for heavy oils, such as deasphalted oil.

The present inventors have discovered in the course of their research that when Se is selected as the modification aid component, the catalyst has desirable selectivity for hydrodecarbonization, and is particularly suitable for the treatment of heavy feedstock oils with high content of residual carbon, such as inferior heavy oil or resid.

The carrier is not particularly limited by the present invention and may be any carrier conventionally used in the art, it may be commercially available or is prepared with any method known in the art, for example, the carrier may be an inorganic refractory oxide. Preferably, the carrier is at least one selected from the group consisting of alumina, silica, and amorphous silica-alumina.

The present application has broad selection ranges for the specific surface area and pore volume of the carrier, preferably, the carrier has a specific surface area within the range of 200-500 m²/g, preferably within the range of 250-400 m²/g, and a pore volume within the range of 0.4-1.0 cm³/g, preferably within the range of 0.6-0.8 cm³/g.

In the invention, the carrier may further comprise a doping element, which may be, for example, one or more selected from the group consisting of phosphorus, silicon, boron, fluorine, and sodium. The doping element may be added in a conventional addition amount, preferably 0.5%-6% of the carrier by mass.

The second aspect of the invention provides a preparation method for the hydrogenation catalyst, the method comprises the following steps:
(1) performing sulfurization on an oxidation state hydrogenation catalyst to obtain a sulfided-state hydrogenation catalyst;
(2) carrying out a desulfurization treatment on the sulfided-state hydrogenation catalyst;
(3) subjecting the treated catalyst obtained in step (2) and a material containing a modification aid component precursor to a contact reaction;
wherein the modification aid component is at least one selected from the elements of groups IB, IIA, IIB, IIIA, and VIA.

In the preparation method provided by the invention, the oxidation state hydrogenation catalyst may be various oxidation state hydrogenation catalysts conventionally used in the art, and is not specifically limited thereto. The catalyst may be prepared with the conventional method in the art or a commercially available catalyst. Preferably, the oxidation state hydrogenation catalyst is an oxidation state hydrogenation catalyst having a heavy oil hydrogenation function.

According to a preferred embodiment of the invention, the oxidation state hydrogenation catalyst comprises a carrier, an active component A, and an active component B, wherein the active component A is at least one selected from the metal elements of group VIII, and the active component B is at least one selected from the metal elements of group VIB. The selection ranges of the carrier, the active component A and the active component B may be the same as those described above for the first aspect, the content will not be repeatedly described herein.

Preferably, the content of carrier is 50%-90%, the content of active component B calculated in terms of oxide is 10%-35%, and the content of active component A calculated in terms of oxide is 2%-8%, based on the weight of the oxidation state catalyst.

The invention does not specifically define the sulfurization described in step (1), and the sulfurization can be carried out with the conventional method in the art. Preferably, the sulfurization in step (1) is sufficient, that is, the active metals in the oxidation state hydrogenation catalyst reach the degree of complete sulfurization with the well-known sulfurization methods in the art. Preferably, the sulfurization comprises dry sulfurization and/or wet sulfurization, which have the conventional meaning in the art.

Preferably, the sulfurization conditions comprise: the sulfurization temperature is within the range of 240-400°C, the sulfurization time is within the range of 2-10h, the pressure of hydrogen gas is within the range of 2-12MPa, and the flow rate of hydrogen gas is 2-25 mL·min⁻¹·g⁻¹ oxidation state hydrogenation catalyst, further preferably, the sulfurization conditions comprise: the sulfurization temperature is within the range of 280-380°C, the sulfurization time is within the range of 3-8h, the pressure of hydrogen gas is within the range of 3-10MPa, and the flow rate of hydrogen gas is 3-20 mL·min⁻¹·g⁻¹ oxidation state hydrogenation catalyst.

According to a preferred embodiment of the invention, the sulfurization liquid used in the wet sulfurization comprises a sulfur-containing compound and an organic solvent, wherein the sulfur-containing compound is at least one selected from the group consisting of dimethyl disulfide, carbon disulfide, diethyl sulfide, ethanethiol, n-butanethiol, di-tert-nonyl polysulfide and dimethyl sulfoxide; the organic solvent is at least one selected from the group consisting of cyclohexane, n-heptane, aviation kerosene and diesel oil.

The mass fraction of sulfur-containing compounds in the sulfurization liquid is selected from a wide range, preferably from 2% to 7%, more preferably from 4% to 6%. Preferably, the flow rate of said sulfurization liquid is 0.5-5 mL·min⁻¹·g⁻¹ oxidation state hydrogenation catalyst, more preferably 1-4 mL·min⁻¹·g⁻¹ oxidation state hydrogenation catalyst.

According to a preferred embodiment of the invention, the dry method sulfurization uses a sulfurization gas comprising hydrogen sulfide and hydrogen gas. Preferably, the sulfurization gas has a hydrogen sulfide content of 1-10% by volume.

According to a preferred embodiment of the invention, the desulfurization treatment is a mild desulfurization treatment. The mild desulfurization treatment refers to the removal of low-coordinated sulfur atoms from the edge and corner sites of the sulfurized active phase while retaining tri-coordinated sulfur atoms in the active phase bulk phase.

The oxidation hydrogenation catalyst of the invention is subjected to an initial sulfurization and a desulfurization treatment in sequence, so that the metal active phase to be modified is in a specific state of desulfurization and high activity, and the exposed active metals are disposed at the outer layer of edge of the active phase, the three-coordinate sulfur atoms and the stable A-B-S crystal structure in the hydrogenation active phase can be efficiently retained, the modification aid component is in contact with the outer metal phase of the active phase more efficiently, such that the modification aid component (denoted as R) forms a combined R-A-B-S combined and mixed active phase with A, B, and S in the obtained hydrogenation catalyst, thereby achieving the objective of improving properties of the hydrogenation catalyst.

Preferably, the temperature of the desulfurization treatment in step (2) is lower than the sulfurization temperature, more preferably, the temperature of the desulfurization treatment is 50-100°C lower than the sulfurization temperature.

Preferably, the conditions of the desulfurization treatment comprise: the temperature is within the range of 180-370°C, more preferably within the range of 200-300°C; the treatment time is within the range of 4-24 hours, more preferably within the range of 6-16 hours, and the total pressure is within the range of 2-18MPa, more preferably within the range of 4-15MPa.

According to the invention, the desulfurization treatment in step (2) is a mild desulfurization treatment, preferably carried out in the presence of hydrogen sulfide, preferably carried out with at least one of the following modes:
(a) performing desulfurization treatment on the sulfided-state hydrogenation catalyst by using the hydrogen gas containing hydrogen sulfide;
(b) performing desulfurization treatment on the sulfided-state hydrogenation catalyst with a sulfurization liquid in the presence of hydrogen gas.

According to the invention, preferably, the volume ratio of hydrogen sulfide to hydrogen gas in mode (a) is 200:1-800:1, more preferably 300:1-600:1, and the total gas flow rate is 5-30 mL·min⁻¹·g⁻¹ oxidation state hydrogenation catalyst, more preferably 10-20 mL·min⁻¹·g⁻¹ oxidation state hydrogenation catalyst.

According to the invention, preferably, the sulfurization liquid in mode (b) comprises a sulfur-containing compound and an organic solvent, wherein the sulfur-containing compound is at least one selected from the group consisting of dimethyl disulfide, carbon disulfide, diethyl sulfide, ethanethiol, n-butanethiol, di-tert-nonyl polysulfide, and dimethyl sulfoxide; the organic solvent is at least one selected from the group consisting of cyclohexane, n-heptane, aviation kerosene, and diesel oil.

Preferably, the mass fraction of the sulfur-containing compounds in the sulfurization liquid in mode (b) is within the range of 0.1-0.6%, for example, 0.1%, 0.2%, 0.3%, 0.4%, 0.5%, 0.6%, or any value within the range consisting of any two of the numerical values.

Preferably, the flow rate of the sulfurization liquid during the process of desulfurization treatment is within the range of 0.5-4.5 mL·⁻¹·g⁻¹ oxidation state hydrogenation catalyst, more preferably within the range of 1-4 mL·h⁻¹·g⁻¹ oxidation state hydrogenation catalyst.

Preferably, the flow rate of hydrogen gas during the process of desulfurization treatment is within the range of 5-30 mL·min⁻¹·g⁻¹ oxidation state hydrogenation catalyst, more preferably within the range of 10-20 mL·min⁻¹·g⁻¹ oxidation state hydrogenation catalyst.

The selection range of the modification aid component species in step (3) of the invention may be the same as the selection range of the modification aid component species described above in the first aspect, the content will not be repeatedly described herein.

The invention has wide selection ranges for the types of the modification aid component precursor, as long as the modification aid component can be provided by the contact reaction in step (3), the modification aid component precursor is preferably an organic compound and/or a hydride containing the modification aid component. Preferably, the modification aid component precursor is at least one selected from the group consisting of gallium acetylacetonate, triethyl gallium, silver stearate, silver acetylacetonate, silver cyclohexanebutyrate, magnesium stearate, dibutyl magnesium, magnesium pyruvate, magnesium L-aspartate, magnesium tetraphenylporphyrin, zinc naphthenate, zinc glycerolate, diethyl selenium, and hydrogen selenide.

The phase of the material containing the modification aid component precursor is not particularly limited in the invention, it may be a solution in the liquid phase or a gas in the gaseous phase.

According to a preferred embodiment of the invention, the material containing the modification aid component precursor is an organic solution containing the modification aid component precursor.

In the preferred embodiment, the mass content of the modification aid component precursor in the organic solution containing the modification aid component precursor is preferably within the range of 0.5-5%, for example, 0.5%, 1%, 2%, 3%, 4%, 4.5%, 5%, or any value within the range consisting of any two of the numerical values.

The selection range of the solvent in the organic solution containing the modification aid component precursor is wide, provided that the solvent can be compatible with the modification aid component precursor, preferably, the solvent in the organic solution containing the modification aid component precursor is one or more selected from toluene, cyclohexane, decalin, tetrahydronaphthalene, and n-heptane.

In order to further improve the properties of the produced hydrogenation catalyst, it is preferable that the organic solution containing modification aid component precursor further comprises a stabilizer selected from the organic alkaline nitrides. The stabilizer, which may also be referred to as a placeholder, is selected from organic alkaline nitrides with certain basicity, the organic alkaline nitrides may adsorb on the acid centers of the carrier and active components, preventing adsorption of the modification aid component on the carrier. A part of the organic alkaline nitrogen compounds adsorbed on the active component can be hydro-converted into hydrocarbons and ammonia gas and desorbed from the active phase, and the modification aid component can be attached to the metal active phase.

Preferably, the stabilizer is at least one selected from the group consisting of triethanolamine, diethanolamine, monoethanolamine, pyridine, quinoline, and aniline.

Preferably, the mass content of the stabilizer in the organic solution containing the modification aid component precursor is within the range of 2-8%, for example, 2%, 3%, 4%, 5%, 6%, 7%, 8%, or any value within the range consisting of any two of the numerical values.

According to a preferred embodiment of the invention, the conditions of contact reaction in step (3) comprise: the temperature is within the range of 80-220°C, more preferably within the range of 100-200°C, the pressure is within the range of 0.2-8MPa, more preferably within the range of 0.5-6MPa, the reaction time is within the range of 2-24 hours, more preferably within the range of 4-20 hours; the flow rate of hydrogen gas is 2-20 mL·min⁻¹·g⁻¹ oxidation state hydrogenation catalyst, more preferably 5-15 mL·min⁻¹·g⁻¹ oxidation state hydrogenation catalyst; the flow rate of the material containing the modification aid component precursor is 2-10 mL·h⁻¹·g⁻¹ oxidation state hydrogenation catalyst, more preferably 3-8 mL·h⁻¹·g⁻¹ oxidation state hydrogenation catalyst.

The above content specifies some preferred embodiments under the circumstance that the material containing the modification aid component precursor is an organic solution containing a modification aid component precursor. When the modification aid component is at least one of Ag, Mg, Zn, and Ga, the modification is preferably carried out in this manner.

The following content describes in detail the circumstance where the material containing the modification aid component precursor is a mixed gas containing the modification aid component precursor. Preferably, the material containing the modification aid component precursor is a mixed gas containing the modification aid component precursor, and the mixed gas further comprises hydrogen gas.

Preferably, the volume content of the modification aid component precursor in the mixed gas containing the modification aid component precursor is within the range of 1%-20%, more preferably within the range of 3%-15%, and the volume content of the hydrogen gas in the mixed gas containing the modification aid component precursor is within the range of 80% -99%, more preferably within the range of 85% -97%.

In the preferred embodiment, the modification aid component precursor is hydrogen selenide.

In the preferred embodiment, the conditions of contact reaction in step (3) comprise: the temperature is within the range of 120-250°C, more preferably within the range of 150-220°C, the reaction time is within the range of 1-8 hours, more preferably within the range of 2-6 hours; the reaction pressure is within the range of 2-12MPa, more preferably within the range of 4-8MPa, the flow rate of the mixed gas containing the modification aid component precursor is 5-40 mL·min⁻¹·g⁻¹ oxidation state hydrogenation catalyst, more preferably 10-30 mL·min⁻¹·g⁻¹ oxidation state hydrogenation catalyst.

The invention optionally further comprises a process of carrying out secondary sulfurization on the catalyst obtained in step (3). The conditions and modes of the secondary sulfurization are not particularly limited in the invention, the sulfurization can be implemented with reference to step (1). Preferably, the secondary sulfurization can be selected as the wet sulfurization. The sulfurization liquid used in the secondary sulfurization may comprise a sulfur-containing compound and an organic solvent; the mass fraction of the sulfur-containing compound in the sulfurization liquid is preferably within the range of 1%-5%, preferably within the range of 1.5%-3.5%. The sulfur-containing compound is at least one selected from the group consisting of diethyl sulfide, ethanethiol, n-butanethiol, di-tert-nonyl polysulfide, and dimethyl sulfoxide; the organic solvent is at least one selected from the group consisting of cyclohexane, n-heptane, aviation kerosene, diesel oil and the like.

Further, the conditions of the secondary sulfurization in step (4) comprise: the temperature is within the range of 250-350°C, preferably within the range of 280-320°C; the reaction time is within the range of 2-24 hours, preferably within the range of 4-16 hours; the pressure of hydrogen gas is within the range of 2-8MPa, preferably within the range of 2-6MPa, the flow rate of hydrogen gas is 2-15 mL·min⁻¹·g⁻¹ oxidation state hydrogenation catalyst, preferably 5-10 mL·min⁻¹·g⁻¹ oxidation state hydrogenation catalyst. The flow rate of the sulfurization liquid is 1-5 mL·h⁻¹·g⁻¹ oxidation state hydrogenation catalyst, preferably 2-4 mL·h⁻¹·g⁻¹ oxidation state hydrogenation catalyst.

It is further preferred that the temperature of the initial sulfurization is higher than the temperature of the secondary sulfurization, preferably 20-100°C higher than the temperature of the secondary sulfurization, and the temperature of the secondary sulfurization is higher than the temperature of the desulfurization treatment, preferably 20-80°C higher than the temperature of the desulfurization treatment.

The third aspect of the invention provides a use of the hydrogenation catalyst according to the first aspect or the hydrogenation catalyst produced with the preparation method according to the second aspect in the hydrogenation of petroleum products. When the catalyst provided by the invention is used in the hydrogenation of petroleum products, the catalyst has desirable hydrogenation capability and stability. The selection of the various modification aid components also provides additional advantages to the catalyst provided by the invention.

The present inventors have discovered in the course of their research that when Ga is selected as the modification aid component, the catalyst is particularly suitable for the hydrodenitrogenation treatment for heavy oils. Preferably, the modification aid component in the hydrogenation catalyst is Ga, and the use is said use in the hydrodenitrogenation treatment of heavy oil products. Preferably, the catalyst is used for treating heavy oil products with a nitrogen content of more than 1,000 µg/g, further preferably within the range of 1,500-3,000µg/g, and residual carbon content by mass of more than 10wt%, further preferably within the range of 12 wt% -15 wt%.

The present inventors have discovered in the course of their research that when Zn is selected as the modification aid component, the catalyst is particularly suitable for the hydrodesulfurization treatment of heavy oils. Preferably, the modification aid component in the hydrogenation catalyst is Zn, and the use is said use in the hydrodesulfurization treatment of heavy oil products. Preferably, the catalyst is used for treating heavy oil products with a sulfur content of more than 2.0 wt%, especially heavy oil products with a sulfur content of more than 3.0 wt%. The carbon residue content of the heavy oil is preferably 8.0wt% or more, and further preferably within the range of 10wt% - 15 wt%.

The invention has a wider selection range of the total content of the metal nickel and vanadium in the heavy oil product, preferably, the total content of the metal nickel and the vanadium (Ni + V) in the heavy oil product is less than 100 µg/g, further preferably 20-60 µg/g. The heavy oil includes but is not limited to, deasphalted oil.

The present inventors have discovered in the course of their research that when Ag is selected as the modification aid component, the catalyst is particularly suitable for processing oil products with low sulfur content. Preferably, the modification aid component in the hydrogenation system is Ag, and the use is said use in oil products with low sulfur content. When the Ag modification hydrogenation catalyst is used for processing the oil products with low-sulfur content, the catalyst is used for hydrogenation saturation of the substances such as olefins, alkadiene, and aromatic hydrocarbons in the oil products, and performing hydrodeoxygenation and hydrodecarboxylation, it has desirable hydrogenation saturation capability, and stable hydrodeoxygenation and hydrodecarboxylation capability, and has an advantage of high stability, the catalyst is particularly applicable for the long-term operation. Preferably, the sulfur content of the low sulfur oil product is less than 200 µg/g. The low-sulfur oil product comprises but is not limited to at least one of biodiesel, Fischer-Tropsch synthesis oil, low-temperature coal tar, etc.

The present inventors have discovered in the course of their research that when Mg is selected as the modification aid component, the catalyst is particularly suitable for selective hydrogenation saturation of oil products for olefins. Preferably, the modification aid component in the hydrogenation catalyst is Mg, and the use is said use in the selective hydrogenation saturation of oil products for olefins. Preferably, the catalyst is used for treating secondary processing feedstock oil with an olefin content of not less than 10% by mass. The secondary processing feedstock oil may be at least one of coal-made synthetic oil, coal tar, ebullated bed resid hydrogenation tail oil, ethylene coke, etc.

The present inventors have discovered in the course of their research that when Se is selected as the modification aid component, the catalyst is particularly suitable for hydrodecarbonization of heavy feedstock oils. Preferably, the modification aid component in the hydrogenation catalyst is Se, and the use is said use in hydrodecarbonization of heavy feedstock oils. Preferably, the heavy feed oil is the heavy feed oil having a content of residual carbon by mass of 10% or more, particularly, the heavy feed oil is the heavy feed oil having a content of residual carbon by mass of 15% or more. The heavy feed oil can be derived from inferior heavy oil and/or resid.

According to the use in the present invention, the oil product preferably carries out a reaction with the catalyst in the presence of hydrogen gas. Preferably, the reaction conditions comprise: the reaction temperature is within the range of 200-420°C, more preferably within the range of 250-400°C; the hydrogen gas pressure is within the range of 4-25 MPa, more preferably within the range of 6-22MPa; the liquid hourly space velocity is within the range of 0.1-3h⁻¹, preferably within the range of 0.1-2h⁻¹, and the volume ratio of hydrogen gas to oil is within the range of 400:1-1,500:1, preferably within the range of 400:1-1,200: 1.

The preparation process and the product properties of the method according to the invention are further illustrated below with reference to examples and comparative examples, but the following examples do not impose limitations on the method of the invention.

In the hydrogenation catalysts in the following Examples and Comparative Examples, both the content of the modification aid component distributed in an A-B-S active phase region relative to the total content of the modification aid component and the content of sulfur at the edge and corner sites of the A-B-S active phase relative to the total sulfur content of the A-B-S active phase were characterized by TEM-EDS (Transmission Electron Microscope - Energy Dispersive X-ray Spectroscopy) method, and the specific method was as described in the

### DESCRIPTION OF THE PREFERRED EMBODIMENT.

Each of the following oxidation state hydrogenation catalysts used in Examples A1-A6 and Comparative Examples A1-A5 was produced with the following preparation method:

1,000.0g of alumina dry glue powder was weighed, 30.0g of citric acid and 10.0g of sesbania powder were added and uniformly mixed, 900.0g of an aqueous solution containing 2.0% by mass of nitric acid was added, and ground for 30.0 min, and then subjected to strip extrusion by using a clover orifice plate having a diameter of 1.6 mm. The strips were dried at 120°C for 6.0 hours, and then calcinated at 600°C for 6.0 hours. The calcinated carrier was denoted as S-0 (the carrier had a specific surface area of 304 m²/g and a pore volume of 0.75 cm³/g). 120.0 g of ammonium heptamolybdate tetrahydrate, 80.0 g of nickel nitrate hexahydrate, and 120.0 g of deionized water were weighed, and subsequently fully stirred at 80°C for 30 min, cooled to room temperature, and then diluted with deionized water to reach a constant volume of 180.0 mL, the obtained solution was denoted as Q-0.

200 g of the carrier S-0 was taken, impregnated with the solution Q-0, naturally dried for 24 hours, and then subjected to drying at 120°C for 4 hours and calcinated at 420°C for 4.0 hours, the prepared oxidation state hydrogenation catalyst was denoted as CT-0 (the content of the carrier was 68.4%, the content of molybdenum calculated in terms of oxide was 26.5%, and the content of nickel calculated in terms of oxide was 5.1%, based on the weight of the catalyst).

### Example A1

1,000 g of cyclohexane and 50.0 g of dimethyl disulfide were taken to formulate a sulfurization liquid marked as SQ-0.

1,000 g of cyclohexane and 2.0 g of dimethyl disulfide were taken to formulate a sulfurization liquid labeled TQ-1.

1,000 g of toluene, 25.0 g of gallium acetylacetonate, and 40.0 g of triethanolamine were taken to formulate an organic solution containing gallium, which was denoted as GQ-1.

20.0g of CT-0 was put into a reaction tube, and sulfurized with SQ-0, during the sulfurization process, the pressure of hydrogen gas was 6.0 MPa, the flow rate of hydrogen gas was 300.0 mL/min, the flow rate of said sulfurization liquid SQ-0 was 40.0 mL/h, the sulfurization temperature was 350°C, the sulfurization time was 6 hours, and the prepared sulfided-state hydrogenation catalyst was marked as SCT-0.

The temperature of the reaction tube was reduced to 260°C, the pressure of hydrogen gas was adjusted to 5.0 MPa, the flow rate of hydrogen gas was 200.0 mL/min, the TQ-1 was introduced into the reaction tube, the flow rate was 30.0 mL/h, and the treatment time was 9 hours. The prepared catalyst was denoted as TCT-1.

The temperature of the reaction tube was reduced to 110°C, the pressure of hydrogen gas was adjusted to 0.8 MPa, the flow rate of hydrogen gas was 120.0 mL/min, the GQ-1 was introduced into the reaction tube, the flow rate was 120.0 mL/h, and the treatment time was 8.0 hours. The prepared catalyst was marked as ECT-1.

### Example A2

The process for preparing the sulfided-state hydrogenation catalyst SCT-0 was the same as that in Example A1.

1,000 g of cyclohexane and 3.0 g of dimethyl disulfide were taken to formulate a sulfurization liquid labeled TQ-2.

1,000 g of toluene, 15.0 g of triethyl gallium, and 50.0 g of triethanolamine were taken to formulate an organic solution containing gallium, which was denoted as GQ-2.

The temperature of the reaction tube was reduced to 280°C, the pressure of hydrogen gas was adjusted to 6.0 MPa, the flow rate of hydrogen gas was 300.0 mL/min, the TQ-2 was introduced into the reaction tube, the flow rate was 40.0 mL/h, and the treatment time was 12 hours. The prepared catalyst was denoted as TCT-2.

The temperature of the reaction tube was reduced to 130°C, the pressure of hydrogen gas was adjusted to 1.2 MPa, the flow rate of hydrogen gas was 150.0 mL/min, the GQ-2 was introduced into the reaction tube, the flow rate was 120.0 mL/h, and the treatment time was 8.0 hours. The prepared catalyst was marked as ECT-2.

### Example A3

The process for preparing the sulfided-state hydrogenation catalyst SCT-0 was the same as that in Example A1.

1,000 g of cyclohexane and 4.0 g of dimethyl disulfide were taken to formulate a sulfurization liquid labeled TQ-3.

1,000 g of toluene, 10.0 g of triethyl gallium, and 20.0 g of gallium acetylacetonate, and 60.0 g of triethanolamine were taken to formulate an organic solution containing gallium, which was denoted as GQ-3.

The temperature of the reaction tube was reduced to 300°C, the pressure of hydrogen gas was adjusted to 10.0 MPa, the flow rate of hydrogen gas was 400.0 mL/min, the TQ-3 was introduced into the reaction tube, the flow rate was 40.0 mL/h, and the treatment time was 12 hours. The prepared catalyst was denoted as TCT-3.

The temperature of the reaction tube was reduced to 150°C, the pressure of hydrogen gas was adjusted to 1.8 MPa, the flow rate of hydrogen gas was 180.0 mL/min, the GQ-3 was introduced into the reaction tube, the flow rate was 120.0 mL/h, and the treatment time was 8.0 hours. The prepared catalyst was marked as ECT-3.

### Example A4

The preparation procedures of carrier S-0, solution Q-0, oxidation state hydrogenation catalyst CT-0, sulfurization liquid SQ-0, and sulfide-state hydrogenation catalyst SCT-0 were the same as those in Example A1.

The temperature of the reaction tube was reduced to 280°C, the reaction pressure was adjusted to 6.0 MPa, the mixed gas of hydrogen gas and hydrogen sulfide was introduced into the reaction tube, the volume ratio of the hydrogen gas to the hydrogen sulfide was 400: 1, the total flow rate of the mixed gas was 400 mL/min, the treatment time was 12 hours. The prepared catalyst was denoted as TCT-4.

1,000 g of toluene, 15.0 g of triethyl gallium, and 15.0 g of gallium acetylacetonate, and 60.0 g of triethanolamine were taken to formulate an organic solution containing gallium, which was denoted as GQ-4.

The temperature of the reaction tube was reduced to 150°C, the pressure of hydrogen gas was adjusted to 0.6 MPa, the flow rate of hydrogen gas was 150.0 mL/min, the Q-4 was introduced into the reaction tube, the flow rate was 120.0 mL/h, and the treatment time was 8.0 hours. The prepared catalyst was marked as ECT-4.

### Example A5

The preparation procedures of carrier S-0, solution Q-0, oxidation state hydrogenation catalyst CT-0, sulfurization liquid SQ-0, and sulfide-state hydrogenation catalyst SCT-0 were the same as those in Example A1.

The temperature of the reaction tube was reduced to 280°C, the pressure of hydrogen gas was adjusted to 6.0 MPa, the mixed gas of hydrogen gas and hydrogen sulfide was introduced into the reaction tube, the volume ratio of the hydrogen gas to the hydrogen sulfide was 500:1, the total flow rate of the mixed gas was 500 mL/min, the treatment time was 12 hours. The prepared catalyst was denoted as TCT-5.

1,000 g of toluene, 10.0 g of triethyl gallium, and 20.0 g of gallium acetylacetonate, and 60.0 g of triethanolamine were taken to formulate an organic solution containing gallium, which was denoted as GQ-5.

The temperature of the reaction tube was reduced to 150°C, the pressure of hydrogen gas was adjusted to 0.6 MPa, the flow rate of hydrogen gas was 150.0 mL/min, the GQ-5 was introduced into the reaction tube, the flow rate was 120.0 mL/h, and the treatment time was 8.0 hours. The prepared catalyst was marked as ECT-5.

### Example A6

The catalyst was prepared according to the method in Example A1, except that triethanolamine was not added to the organic solution GQ-1. The prepared catalyst was marked as ECT-6.

### Comparative Example A1

20.0g of CT-0 was put into a reaction tube, and sulfurized with SQ-0, during the sulfurization process, the pressure of hydrogen gas was 6.0 MPa, the flow rate of hydrogen gas was 300.0 mL/min, the flow rate of said sulfurization liquid SQ-0 was 40.0 mL/h, the sulfurization temperature was 350°C, the sulfurization time was 6 hours, and the sulfided catalyst was marked as DCT-1.

### Comparative Example A2

The preparation procedure of the catalyst DCT-1 was the same as that in Comparative Example A1.

The temperature of the reaction tube loaded with the catalyst DCT-1 was reduced to 260°C, the hydrogen gas pressure was adjusted to 5.0 MPa, the flow rate of hydrogen gas was 200.0 mL/min, the TQ-1 was introduced into the reaction tube, the flow rate was 30.0 mL/h, and the treatment time was 9 hours. The prepared catalyst was denoted as DCT-2.

### Comparative Example A3

The preparation procedure of the sulfided-state hydrogenation catalyst SCT-0 was the same as that in Example A1.

The temperature of the reaction tube loaded with the catalyst SCT-0 was reduced to 110°C, the pressure was adjusted to 0.8 MPa, the flow rate of hydrogen gas was 120.0 mL/min, the GQ-1 was introduced into the reaction tube, the flow rate was 120.0 mL/h, and the treatment time was 8.0 hours. The prepared catalyst was denoted as DCT-3.

### Comparative Example A4

The preparation procedure of the sulfided-state hydrogenation catalyst SCT-0 was the same as that in Example A1.

The temperature of the reaction tube loaded with the catalyst SCT-0 was reduced to 260°C, the pressure of hydrogen gas was adjusted to 5.0 MPa, the flow rate of hydrogen gas was 240.0 mL/min, and the treatment time was 9 hours. The prepared catalyst was denoted as DTCT-4.

The temperature of the reaction tube was reduced to 110°C, the pressure was adjusted to 0.8 MPa, the flow rate of hydrogen gas was 120.0 mL/min, the GQ-1 was introduced into the reaction tube, the flow rate was 120.0 mL/h, and the treatment time was 8.0 hours. The prepared catalyst was denoted as DCT-4.

### Comparative Example A5

1000.0g of alumina dry glue powder was weighed, 30.0g of citric acid and 10.0g of sesbania powder were added and uniformly mixed, 900.0g of an aqueous solution containing 2.0% by mass of nitric acid was added, and ground for 30.0 min, and then subjected to strip extrusion by using a clover orifice plate having a diameter of 1.6 mm. The strips were dried at 120°C for 6.0 hours, and then calcinated at 600°C for 6.0 hours. The calcinated carrier was denoted as S-0.

120.0 g of ammonium heptamolybdate tetrahydrate, 80.0 g of nickel nitrate hexahydrate, 12.0 g of anhydrous gallium nitrate, and 120.0 g of deionized water were weighed, and subsequently fully stirred at 80°C for 30 min, cooled to room temperature, and then diluted with deionized water to reach a constant volume of 180.0 mL, the obtained solution was denoted as DQ-5.

200 g of the carrier S-0 was taken, impregnated with the solution DQ-5, naturally dried in the air for 24 hours, and then subjected to drying at 120°C for 4 hours and calcinated at 420°C for 4.0 hours, the prepared oxidation state hydrogenation catalyst was denoted as DCT-0.

20.0 g of oxidation state hydrogenation catalyst DCT-0 was put into a reaction tube, and sulfurized with SQ-0 (same as that in Example A1), during the sulfurization process, the pressure of hydrogen gas was 6.0 MPa, the flow rate of hydrogen gas was 300.0 mL/min, the flow rate of said sulfurization liquid SQ-0 was 40.0 mL/h, the sulfurization temperature was 350°C, the sulfurization time was 6 hours, and the prepared sulfided-state hydrogenation catalyst was marked as DCT-5.

The physicochemical composition of the aforementioned catalysts was shown in Table A1.

**Table A1 Physicochemical composition of catalysts**

| Catalyst No. | Mo, wt% | Ni, wt% | Ga, wt% | S, wt% |
|---|---|---|---|---|
| ECT-1 | 16.7 | 4.3 | 1.0 | 13.2 |
| ECT-2 | 16.8 | 4.4 | 1.3 | 13.3 |
| ECT-3 | 16.7 | 4.4 | 1.7 | 13.5 |
| ECT-4 | 16.6 | 4.3 | 1.9 | 13.7 |
| ECT-5 | 16.8 | 4.5 | 1.8 | 13.4 |
| ECT-6 | 16.8 | 4.4 | 1.7 | 13.1 |
| DCT-1 | 16.9 | 4.3 | - | 13.8 |
| DCT-2 | 16.9 | 4.5 | - | 11.1 |
| DCT-3 | 16.8 | 4.2 | 1.7 | 14.2 |
| DCT-4 | 16.7 | 4.3 | 1.8 | 8.9 |
| DCT-5 | 16.8 | 4.4 | 1.9 | 14.4 |

The hydrogenation catalysts were characterized by TEM-EDS to obtain the percentage of the content of Ga distributed in the Ni-Mo-S active phase region relative to the total Ga content and the percentage of the content of sulfur at the edge and corner sites of the Ni-Mo-S active phase relative to the total sulfur content of the Ni-Mo-S active phase. The specific details were shown in Table A2.

**Table A2**

| Catalyst No. | ECT-1 | ECT-2 | ECT-3 | ECT-4 | ECT-5 | ETC-6 | DCT-1 | DCT-2 | DCT-3 | DCT-4 | DCT-5 |
|---|---|---|---|---|---|---|---|---|---|---|---|
| Ga-Ni-Mo-S / Gaₜₒₜₐₗ, % | 79 | 80 | 79 | 76 | 83 | 59 | - | - | 29 | 43 | 27 |
| S_{edge and corner sites}/Sₜₒₜₐₗ, % | 1.5 | 1.1 | 1.3 | 1.0 | 1.2 | 1.3 | 8.5 | 1.2 | 7.2 | 4.5 | 7.9 |

### Test Example A1

The catalysts prepared in Examples A1-A6 were subjected to the activity evaluation, and the properties of deasphalted oil were shown in Table A3. A fixed bed process was adopted, and hydrogenation protective agents (FZC-100B) was filled before said catalysts, wherein the filling volume ratio of the protective agents to the hydrodenitrogenation catalysts obtained in the Examples was 1: 4. The operating conditions were as follows: the reaction temperature was 390°C, the reaction pressure was 20.0MPa, hydrogen/oil volume ratio was 1,000: 1, the liquid hourly space velocity was 0.2 h⁻¹. After the reaction for 2,000 hours, the residual carbon value, the sulfur content, and the nitrogen content in the distillation cut at a temperature of not less than 200°C of the hydrogenated oil product were analyzed, the results were illustrated in Table A4.

### Comparative Test Example A1

The catalysts prepared in Comparative Examples A1-A5 were subjected to the activity evaluation, and the properties of deasphalted oil were shown in Table A3. A fixed bed process was adopted, and hydrogenation protective agents (FZC-100B) was filled before said catalysts, wherein the filling volume ratio of the protective agents to the hydrodenitrogenation catalysts obtained in the Examples was 1: 4. The operating conditions were as follows: the reaction temperature was 390°C, the reaction pressure was 20.0MPa, hydrogen/oil volume ratio was 1,000: 1, the liquid hourly space velocity was 0.2 h⁻¹. After the reaction for 2,000 hours, the residual carbon value, the sulfur content, and the nitrogen content in the distillation cut at a temperature of not less than 200°C of the hydrogenated oil product were analyzed, the results were illustrated in Table A4.

**Table A3 Properties of deasphalted oils**

| | |
|---|---|
| Density, kg/m³ | 998 |
| Vanadium + Nickel content, µg/g | 24.4 |
| Sulfur content, µg/g | 35074 |
| Nitrogen content, µg/g | 2958 |
| Saturation fraction, wt% | 42.8 |
| Fragrance fraction, wt% | 35.2 |
| Colloid, wt% | 21.9 |
| Asphaltenes, wt% | 0.1 |
| Residual carbon value, wt% | 12.9 |

**Table A4 Evaluation results of catalysts after hydrogenation for 2,000 h**

| | Catalyst No. | Nitrogen content, µg/g | Residual carbon value, wt% | Saturation fraction, wt% | **Sulfur** content, µg/g |
|---|---|---|---|---|---|
| Example A1 | ECT-1 | 413 | 1.2 | 61.3 | 1263 |
| Example A2 | ECT-2 | 385 | 1.3 | 59.3 | 1534 |
| Example A3 | ECT-3 | 359 | 1.1 | 60.5 | 1397 |
| Example A4 | ECT-4 | 401 | 0.9 | 61.9 | 1429 |
| Example A5 | ECT-5 | 365 | 1.0 | 58.7 | 1296 |
| Example A6 | ECT-6 | 604 | 1.8 | 57.4 | 1710 |
| Comparative Example A1 | DCT-1 | 1362 | 4.0 | 48.9 | 2436 |
| Comparative Example A2 | DCT-2 | 1638 | 4.2 | 51.4 | 3637 |
| Comparative Example A3 | DCT-3 | 761 | 2.1 | 55.8 | 1937 |
| Comparative Example A4 | DCT-4 | 1068 | 3.0 | 50.7 | 2594 |
| Comparative Example A5 | DCT-5 | 846 | 2.6 | 56.8 | 2193 |

As can be seen from the evaluation results in Table A4, the hydrogenation catalysts prepared by the invention not only have excellent hydrodenitrogenation capability but also exhibit desirable aromatic hydrocarbon saturation capability and hydrodesulfurization capability.

Each of the following oxidation state hydrogenation catalysts used in Examples B1-B5 and Comparative Examples B1-B5 was produced with the following preparation method:

1,000.0g of alumina dry glue powder was weighed, 30.0g of citric acid, and 10.0g of sesbania powder were added and uniformly mixed, 900.0g of an aqueous solution containing 2.0% by mass of nitric acid was added, and ground for 30.0 min, and then subjected to strip extrusion by using a clover orifice plate having a diameter of 1.6 mm. The strips were dried at 120°C for 6.0 hours, and then calcinated at 600°C for 6.0 hours. The calcinated carrier was denoted as S-0 (the carrier had a specific surface area of 304 m²/g and a pore volume of 0.75 cm³/g). 100.0 g of ammonium heptamolybdate tetrahydrate, 60.0 g of nickel nitrate hexahydrate, and 120.0 g of deionized water were weighed, and subsequently fully stirred at 80°C for 30 min, cooled to room temperature, and then diluted with deionized water to reach a constant volume of 180.0 mL, the obtained solution was denoted as Q-0. 200 g of the carrier S-0 was taken, impregnated with the solution Q-0, naturally dried in the air for 24 hours, and then subjected to drying at 120°C for 4 hours and calcinated at 420°C for 4.0 hours, the prepared oxidation state hydrogenation catalyst was denoted as CT-0 (the content of the carrier was 70.2%, the content of molybdenum calculated in terms of oxide was 25.0%, and the content of nickel calculated in terms of oxide was 4.8%, based on the weight of the catalyst).

### Example B1

1,000 g of cyclohexane and 50.0 g of dimethyl disulfide were taken to formulate a sulfurization liquid marked as SQ-0.

1,000 g of cyclohexane and 2.0 g of dimethyl disulfide were taken to formulate a sulfurization liquid labeled TQ-1.

1,000 g of toluene, 70.0 g of silver stearate, and 80.0 g of aniline were taken to formulate an organic solution containing silver, which was denoted as YQ-1.

20.0g of oxidation state hydrogenation catalyst CT-0 was put into a reaction tube, an initial sulfurization was performed with SQ-0 under the following conditions: the sulfurization temperature was 350°C, the pressure of hydrogen gas was 6.0 MPa, the flow rate of hydrogen gas was 300.0 mL/min, the flow rate of the sulfurization liquid SQ-0 was 40.0 mL/h, the sulfurization time was 6 hours, and the prepared sulfided-state hydrogenation catalyst was marked as SCT-0.

The temperature of the reaction tube was reduced to 260°C, the pressure of hydrogen gas was adjusted to 5.0 MPa, the flow rate of hydrogen gas was 200.0 mL/min, TQ-1 was introduced into the reaction tube, the flow rate was 30.0 mL/h, and the treatment time was 9 hours. The prepared catalyst was denoted as TCT-1.

The temperature of the reaction tube was reduced to 110°C, the pressure of hydrogen gas was adjusted to 1.0 MPa, the flow rate of hydrogen gas was 120.0 mL/min, YQ-1 was introduced into the reaction tube, the flow rate was 80.0 mL/h, and the treatment time was 9.0 hours. The prepared catalyst was marked as ECT-1.

### Example B2

The process for preparing the sulfided-state hydrogenation catalyst SCT-0 was the same as that in Example B1.

1,000 g of cyclohexane and 3.0 g of carbon disulfide were taken to formulate a sulfurization liquid labeled TQ-2.

2,000 g of toluene, 80.0 g of silver acetylacetonate, and 80.0 g of aniline were taken to formulate an organic solution containing silver, which was denoted as YQ-2.

1,000 g of cyclohexane and 30.0g of carbon disulfide were taken to prepare a sulfurization liquid which was marked as RQ-2.

The temperature of the reaction tube was reduced to 280°C, the pressure of hydrogen gas was adjusted to 6.0 MPa, the flow rate of hydrogen gas was 300.0 mL/min, TQ-2 was introduced into the reaction tube, the flow rate was 40.0 mL/h, and the treatment time was 12 hours. The prepared catalyst was denoted as TCT-2.

The temperature of the reaction tube was reduced to 130°C, the pressure of hydrogen gas was adjusted to 1.5 MPa, the flow rate of hydrogen gas was 150.0 mL/min, YQ-2 was introduced into the reaction tube, the flow rate was 100.0 mL/h, and the treatment time was 12.0 hours. The prepared catalyst was marked as ECT-2.

### Example B3

The process for preparing the sulfided-state hydrogenation catalyst SCT-0 was the same as that in Example B1.

1,000 g of cyclohexane and 4.0 g of dimethyl disulfide were taken to formulate a sulfurization liquid labeled TQ-3.

2,000 g of toluene, 90.0 g of silver cyclohexanebutyrate, and 80.0 g of aniline were taken to formulate an organic solution containing silver, which was denoted as YQ-3.

The temperature of the reaction tube was reduced to 300°C, the pressure of hydrogen gas was adjusted to 10.0 MPa, the flow rate of hydrogen gas was 400.0 mL/min, TQ-3 was introduced into the reaction tube, the flow rate was 40.0 mL/h, and the treatment time was 12 hours. The prepared catalyst was denoted as TCT-3.

The temperature of the reaction tube was reduced to 150°C, the pressure of hydrogen gas was adjusted to 2.0 MPa, the flow rate of hydrogen gas was 180.0 mL/min, YQ-3 was introduced into the reaction tube, the flow rate was 120.0 mL/h, and the treatment time was 15.0 hours. The prepared catalyst was marked as ECT-3.

### Example B4

The process for preparing the sulfided-state hydrogenation catalyst SCT-0 was the same as that in Example B1.

2,000 g of toluene, 100.0 g of silver stearate, and 80.0 g of aniline were taken to formulate an organic solution containing silver, which was denoted as YQ-4.

The temperature of the reaction tube was reduced to 260°C, the reaction pressure was adjusted to 4.0 MPa, the mixed gas of hydrogen gas and hydrogen sulfide was introduced into the reaction tube, the partial pressure ratio of the hydrogen gas to the hydrogen sulfide was 300: 1, the total flow rate of the mixed gas was 300 mL/min, the treatment time was 12 hours. The prepared catalyst was denoted as TCT-4.

The temperature of the reaction tube was reduced to 140°C, the pressure of hydrogen gas was adjusted to 2.5 MPa, the flow rate of hydrogen gas was 150.0 mL/min, YQ-4 was introduced into the reaction tube, the flow rate was 100.0 mL/h, and the treatment time was 12.0 hours. The prepared catalyst was marked as ECT-4.

### Example B5

The process for preparing the sulfided-state hydrogenation catalyst SCT-0 was the same as that in Example B1.

2,000 g of toluene, 60.0 g of silver acetylacetonate, and 80.0 g of aniline were taken to formulate an organic solution containing silver, which was denoted as YQ-5.

The temperature of the reaction tube was reduced to 260°C, the reaction pressure was adjusted to 4.0 MPa, the mixed gas of hydrogen gas and hydrogen sulfide was introduced into the reaction tube, the partial pressure ratio of the hydrogen gas to the hydrogen sulfide was 250: 1, the total flow rate of the mixed gas was 350 mL/min, the treatment time was 12 hours. The prepared catalyst was denoted as TCT-5.

The temperature of the reaction tube was reduced to 160°C, the pressure of hydrogen gas was adjusted to 3.0 MPa, the flow rate of hydrogen gas was 160.0 mL/min, YQ-5 was introduced into the reaction tube, the flow rate was 100.0 mL/h, and the treatment time was 12.0 hours. The prepared catalyst was marked as ECT-5.

### Comparative Example B1

20.0g of CT-0 was put into a reaction tube, and sulfurized with SQ-0, during the sulfurization process, the pressure of hydrogen gas was 6.0 MPa, the flow rate of hydrogen gas was 300.0 mL/min, the flow rate of said sulfurization liquid SQ-0 was 40.0 mL/h, the sulfurization temperature was 350°C, the sulfurization time was 6 hours, and the sulfided catalyst was marked as DCT-1.

### Comparative Example B2

The preparation procedure of the catalyst DCT-1 was the same as that in Comparative Example B1.

The temperature of the reaction tube loaded with the catalyst DCT-1 was reduced to 260°C, the hydrogen gas pressure was adjusted to 5.0 MPa, the flow rate of hydrogen gas was 200.0 mL/min, TQ-1 was introduced into the reaction tube, the flow rate was 30.0 mL/h, and the treatment time was 9 hours. The prepared catalyst was denoted as DCT-2.

### Comparative Example B3

The preparation procedure of the sulfided-state hydrogenation catalyst SCT-0 was the same as that in Example B1.

2,000 g of toluene, 90.0 g of cyclohexane silver butyrate, and 80.0 g of aniline were taken to formulate an organic solution containing silver, which was denoted as DYQ-3.

The temperature of the reaction tube loaded with the catalyst SCT-0 was reduced to 150°C, the pressure was adjusted to 2.0 MPa, the flow rate of hydrogen gas was 180.0 mL/min, DYQ-1 was introduced into the reaction tube, the flow rate was 120.0 mL/h, and the treatment time was 15.0 hours. The prepared catalyst was denoted as DCT-3.

### Comparative Example B4

The preparation procedure of the sulfided-state hydrogenation catalyst DCT-1 was the same as that in Example B1.

2,000 g of toluene, 90.0 g of cyclohexane silver butyrate, and 80.0 g of aniline were taken to formulate an organic solution containing silver, which was denoted as DYQ-4.

The temperature of the reaction tube loaded with the catalyst DCT-1 was reduced to 300°C, the hydrogen gas pressure was adjusted to 10.0 MPa, the flow rate of hydrogen gas was 400.0 mL/min, and the treatment time was 12 hours. The prepared catalyst was denoted as DTCT-4.

The temperature of the reaction tube loaded with the catalyst DTCT-4 was reduced to 150°C, the hydrogen gas pressure was adjusted to 2.0 MPa, the flow rate of hydrogen gas was 180.0 mL/min, DYQ-4 was introduced into the reaction tube, the flow rate was 120.0 mL/h, and the treatment time was 150 hours. The prepared catalyst was denoted as DCT-4.

### Comparative Example B5

1,000.0g of alumina dry glue powder was weighed, 30.0g of citric acid and 10.0g of sesbania powder were added and uniformly mixed, 900.0g of an aqueous solution containing 2.0% by mass of nitric acid was added, and ground for 30.0 min, and then subjected to strip extrusion by using a clover orifice plate having a diameter of 1.6 mm. The strips were dried at 120°C for 6.0 hours, and then calcinated at 600°C for 6.0 hours. The calcinated carrier was denoted as S-0.

100.0 g of ammonium heptamolybdate tetrahydrate, 60.0 g of nickel nitrate hexahydrate, 7.5 g of silver nitrate, and 120.0 g of deionized water were weighed, and subsequently fully stirred at 80°C for 30 min, cooled to room temperature, and then diluted with deionized water to reach a constant volume of 180.0 mL, the obtained solution was denoted as DQ-5.

200 g of the carrier S-0 was taken, impregnated with the solution DQ-5, naturally dried in the air for 24 hours, and then subjected to drying at 120°C for 4 hours and calcinated at 420°C for 4.0 hours, the prepared oxidation state hydrogenation catalyst was denoted as DCT-0.

20.0 g of oxidation state hydrogenation catalyst DCT-0 was put into a reaction tube, an initial sulfurization was performed by using SQ-0, during the sulfurization process, the pressure of hydrogen gas was 6.0 MPa, and the flow rate of hydrogen gas was 300.0 mL/min, the flow rate of said sulfurization liquid SQ-0 was 40.0 mL/h, the sulfurization temperature was 350°C, the sulfurization time was 6 hours, and the prepared sulfided-state hydrogenation catalyst was marked as DCT-5.

The composition of the aforementioned catalysts was shown in Table B1.

**Table B1 Composition of the catalysts prepared in the Examples and Comparative Examples**

| Catalyst No. | Mo, wt% | Ni, wt% | Ag, wt% | S, wt% |
|---|---|---|---|---|
| ECT-1 | 16.2 | 3.59 | 1.30 | 12.76 |
| ECT-2 | 16.1 | 3.61 | 1.62 | 12.91 |
| ECT-3 | 16.0 | 3.63 | 1.71 | 13.02 |
| ECT-4 | 16.0 | 3.57 | 1.70 | 14.57 |
| ECT-5 | 16.1 | 3.65 | 1.72 | 14.29 |
| DCT-1 | 16.2 | 3.68 | - | 12.20 |
| DCT-2 | 16.0 | 3.61 | - | 12.65 |
| DCT-3 | 16.0 | 3.63 | 1.38 | 12.84 |
| DCT-4 | 16.1 | 3.61 | 1.50 | 8.24 |
| DCT-5 | 16.2 | 3.60 | 1.58 | 12.15 |

The hydrogenation catalysts obtained in the Examples and Comparative Examples were characterized by TEM-EDS to obtain the percentage of the content of Ag distributed in the Ni-Mo-S active phase region relative to the total Ag content and the percentage of the content of sulfur at the edge and corner sites of the Ni-Mo-S active phase relative to the total sulfur content of the Ni-Mo-S active phase. The specific details were shown in Table B2.

**Table B2**

| Catalyst No. | ECT-1 | ECT-2 | ECT-3 | ECT-4 | ECT-5 | DCT-1 | DCT-2 | DCT-3 | DCT-4 | DCT-5 |
|---|---|---|---|---|---|---|---|---|---|---|
| Ag-Ni-Mo-S/Agₜₒₜₐₗ, % | 89 | 84 | 85 | 88 | 90 | - | - | 35 | 52 | 29 |
| S_{edge and corner sites}/Sₜₒₜₐₗ, % | 2.5 | 2.6 | 2.4 | 2.5 | 2.6 | 7.3 | 1.8 | 7.9 | 4.0 | 7.4 |

### Test example B1

The activity and the stability of the catalysts ECT-1 to ECT-5 in Example B1-B5 were tested on a fixed bed hydrogenation unit under the following evaluation conditions: the reaction pressure was 8.0 MPa, hydrogen/oil volume ratio was 500:1, the temperature was 300°C, the hourly space velocity was 2.0 h⁻¹, the samples after the reaction periods of 500-hour and 1,500-hour were sampled and analyzed. Wherein the selected feedstock oil was Fischer-Tropsch synthetic oil, the properties of which were shown in Table B3, and the catalyst evaluation results were shown in Table B4.

### Comparative Test Example B1

The activity and the stability of the catalysts DCT-1 to DCT-5 in Comparative Example B1-B5 were tested on a fixed bed hydrogenation unit, the evaluation conditions were the same as those in Test Example B1.

**Table B3 Properties of feedstock oil**

| Feedstock name | Fischer-Tropsch heavy synthetic oil | | |
|---|---|---|---|
| Density (20°C), kg/m³ | 0.7877 | Acid value (potentiometric titration method) /mgKOH•g⁻¹ | 1.48 |
| Sulfur, µg/g | 31.8 | Alkanes, % | 59.9 |
| Nitrogen, µg/g | 10.4 | Olefins, % | 32.7 |
| C, % | 84.50 | Aromatic hydrocarbons, % | 7.2 |
| H, % | 12.49 | Colloid, % | 4.59 |
| O, % | 3.01 | Asphaltene, % | 0.17 |

**Table B4 Evaluation results of catalysts**

| Evalu ation time | 500 hours | | | | 1,500 hours | | | |
|---|---|---|---|---|---|---|---|---|
| Cataly st No. | Acid value/ mgKO H·g⁻¹ | Alkan es % | Aromatic hydrocarb ons % | Colloi d % | Acid value/ mgKO H·g⁻¹ | Alkan es % | Aromatic hydrocarb ons % | Colloi d % |
| ECT-1 | 0.13 | 2.3 | 1.9 | 0.5 | 0.15 | 2.5 | 2.1 | 0.7 |
| ECT-2 | 0.17 | 2.1 | 1.8 | 0.4 | 0.17 | 2.4 | 1.9 | 0.6 |
| ECT-3 | 0.12 | 2.5 | 1.7 | 0.6 | 0.15 | 2.4 | 1.8 | 0.6 |
| ECT-4 | 0.11 | 2.7 | 1.9 | 0.5 | 0.14 | 2.9 | 1.8 | 0.5 |
| ECT-5 | 0.15 | 2.4 | 1.8 | 0.5 | 0.17 | 2.5 | 1.7 | 0.7 |
| DCT-1 | 0.08 | 2.2 | 1.5 | 0.4 | 0.59 | 5.9 | 3.7 | 2.9 |
| DCT-2 | 0.11 | 2.0 | 1.4 | 0.6 | 0.65 | 6.8 | 4.0 | 2.9 |
| DCT-3 | 0.15 | 3.2 | 2.0 | 0.7 | 0.36 | 3.5 | 3.7 | 1.5 |
| DCT-4 | 0.32 | 3.4 | 2.2 | 1.1 | 0.45 | 5.4 | 3.9 | 1.9 |
| DCT-5 | 0.37 | 3.3 | 2.4 | 0.9 | 0.42 | 5.2 | 4.0 | 2.0 |

As can be seen from the evaluation results in Table B4, the hydrogenation catalysts of the invention in use had excellent hydrogenation deacidification and hydrogenation saturation properties and maintained desirable activity and stability under long-period operation when processing the low-sulfur Fischer-Tropsch synthetic oil.

Each of the following oxidation state hydrogenation catalysts used in Examples C1-C5 and Comparative Examples C1-C5 was produced with the following preparation method:

1,000.0g of alumina dry glue powder was weighed, 10.0g of citric acid, and 50.0g of sesbania powder were added and uniformly mixed, 900.0g of an aqueous solution containing 2.0% by mass of acetic acid was added, blended and kneaded for 20.0 min, and then subjected to strip extrusion by using a clover orifice plate having a diameter of 2.4 mm. The strips were dried at 120°C for 6.0 hours, and then calcinated at 750°C for 6.0 hours. The calcinated carrier was denoted as S-0 (the analysis and test results indicated that the carrier had a specific surface area of 322 m²/g and a pore volume of 0.9 cm³/g). 40.0 g of ammonium heptamolybdate tetrahydrate, 25.0 g of nickel nitrate hexahydrate, and 150.0 g of deionized water were weighed, and subsequently fully stirred at 80°C for 30 min, cooled to room temperature, and then diluted with deionized water to reach a constant volume of 210.0 mL, the obtained solution was denoted as Q-0.

200 g of the carrier S-0 was taken, impregnated with the solution Q-0, naturally dried in the air for 24 hours, and then subjected to drying at 120°C for 4 hours and calcinated at 420°C for 4.0 hours, the prepared oxidation state hydrogenation catalyst was denoted as CT-0 (the content of the carrier was 84.1%, the content of molybdenum calculated in terms of oxide was 13.2%, and the content of nickel calculated in terms of oxide was 2.7%, based on the weight of the catalyst).

### Example C1

1,000 g of cyclohexane and 50.0 g of dimethyl disulfide were taken to formulate a sulfurization liquid marked as SQ-0.

1,000 g of cyclohexane and 2.0 g of dimethyl disulfide were taken to formulate a sulfurization liquid labeled TQ-1.

2,000 g of toluene, 35.0 g of magnesium tetraphenylporphyrin, and 50.0g of diethanolamine were taken to formulate an organic solution containing magnesium, which was denoted as MQ-1.

20.0g of oxidation state hydrogenation catalyst CT-0 was put into a reaction tube, and sulfurized with SQ-0, during the sulfurization process, the pressure of hydrogen gas was 6.0 MPa, the flow rate of hydrogen gas was 300.0 mL/min, the flow rate of said sulfurization liquid SQ-0 was 40.0 mL/h, the sulfurization temperature was 350°C, the sulfurization time was 6 hours, and catalyst after sulfurization was marked as SCT-0.

The temperature of the reaction tube was reduced to 260°C, the pressure of hydrogen gas was adjusted to 5.0 MPa, the flow rate of hydrogen gas was 200.0 mL/min, TQ-1 was introduced into the reaction tube, the flow rate was 30.0 mL/h, and the treatment time was 9 hours. The prepared catalyst was denoted as TCT-1.

The temperature of the reaction tube was reduced to 110°C, the pressure of hydrogen gas was adjusted to 0.4 MPa, the flow rate of hydrogen gas was 100.0 mL/min, MQ-1 was introduced into the reaction tube, the flow rate was 80.0 mL/h, and the treatment time was 10.0 hours. The prepared catalyst was marked as ECT-1.

### Example C2

The preparation procedures of carrier S-0, solution Q-0, oxidation state hydrogenation catalyst CT-0, sulfurization liquid SQ-0, and sulfide-state hydrogenation catalyst SCT-0 were the same as those in Example C1.

1,000 g of cyclohexane and 3.0 g of dimethyl disulfide were taken to formulate a sulfurization liquid labeled as TQ-2.

2,000 g of toluene, 16.0 g of L-magnesium aspartate, and 50.0 g of diethanolamine were taken to formulate an organic solution containing magnesium, which was denoted as MQ-2.

The temperature of the reaction tube was reduced to 280°C, the pressure of hydrogen gas was adjusted to 6.0 MPa, the flow rate of hydrogen gas was 300.0 mL/min, TQ-2 was introduced into the reaction tube, the flow rate was 40.0 mL/h, and the treatment time was 12 hours. The prepared catalyst was denoted as TCT-2.

The temperature of the reaction tube was reduced to 130°C, the pressure of hydrogen gas was adjusted to 0.6 MPa, the flow rate of hydrogen gas was 120.0 mL/min, MQ-2 was introduced into the reaction tube, the flow rate was 100.0 mL/h, and the treatment time was 12.0 hours. The prepared catalyst was marked as ECT-2.

### Example C3

The preparation procedures of carrier S-0, solution Q-0, oxidation state hydrogenation catalyst CT-0, sulfurization liquid SQ-0, and sulfide-state hydrogenation catalyst SCT-0 were the same as those in Example C1.

1,000 g of cyclohexane and 4.0 g of dimethyl disulfide were taken to formulate a sulfurization liquid labeled TQ-3.

2,000 g of cyclohexane, 12.0g of di-n-butylmagnesium, and 50.0g of diethanolamine were taken to formulate an organic solution containing magnesium, which was denoted as MQ-3.

The temperature of the reaction tube was reduced to 300°C, the pressure of hydrogen gas was adjusted to 8.0 MPa, the flow rate of hydrogen gas was 400.0 mL/min, TQ-3 was introduced into the reaction tube, the flow rate was 40.0 mL/h, and the treatment time was 12 hours. The prepared catalyst was denoted as TCT-3.

The temperature of the reaction tube was reduced to 150°C, the pressure of hydrogen gas was adjusted to 0.8 MPa, the flow rate of hydrogen gas was 140.0 mL/min, the organic solution MQ-3 was introduced into the reaction tube, the flow rate was 120.0 mL/h, and the treatment time was 10.0 hours. The prepared catalyst was marked as ECT-3.

### Example C4

The process for preparing the sulfided-state hydrogenation catalyst SCT-0 was the same as that in Example C1.

The temperature of the reaction tube was reduced to 280°C, the reaction pressure was adjusted to 6.0 MPa, the mixed gas of hydrogen gas and hydrogen sulfide was introduced into the reaction tube, the volume ratio of the hydrogen gas to the hydrogen sulfide was 350:1, the total flow rate of the mixed gas was 350 mL/min, the treatment time was 12 hours. The prepared catalyst was denoted as TCT-4.

2,000 g of toluene, 12.0 g of magnesium pyruvate, and 50.0 g of diethanolamine were taken to formulate an organic solution containing magnesium, which was denoted as MQ-4.

The temperature of the reaction tube was reduced to 140°C, the pressure of hydrogen gas was adjusted to 0.6 MPa, the flow rate of hydrogen gas was 130.0 mL/min, MQ-4 was introduced into the reaction tube, the flow rate was 120.0 mL/h, and the treatment time was 12.0 hours. The prepared catalyst was marked as ECT-4.

### Example C5

The process for preparing the sulfided-state hydrogenation catalyst SCT-0 was the same as that in Example C1.

The temperature of the reaction tube was reduced to 300°C, the reaction pressure was adjusted to 6.0 MPa, the mixed gas of hydrogen gas and hydrogen sulfide was introduced into the reaction tube, the volume ratio of the hydrogen gas to the hydrogen sulfide was 550:1, the total flow rate of the mixed gas was 450 mL/min, the treatment time was 12 hours. The prepared catalyst was denoted as TCT-5.

2,000.0g of n-octane, 30.0g of magnesium stearate, and 50.0 g of diethanolamine were taken to formulate an organic solution containing magnesium, which was denoted as MQ-5.

The temperature of the reaction tube was reduced to 150°C, the pressure of hydrogen gas was adjusted to 0.6 MPa, the flow rate of hydrogen gas was 130.0 mL/min, MQ-5 was introduced into the reaction tube, the flow rate was 120.0 mL/h, and the treatment time was 14.0 hours. The prepared catalyst was marked as ECT-5.

### Comparative Example C1

20.0g of CT-0 was put into a reaction tube, and sulfurized with the sulfurization liquid SQ-0, during the sulfurization process, the pressure of hydrogen gas was 6.0 MPa, the flow rate of hydrogen gas was 300.0 mL/min, the flow rate of said sulfurization liquid SQ-0 was 40.0 mL/h, the sulfurization temperature was 350°C, the sulfurization time was 6.0 hours, and the sulfided catalyst was marked as DCT-1.

### Comparative Example C2

The preparation procedure of the catalyst DCT-1 was the same as that in Comparative Example C1.

The temperature of the reaction tube loaded with the catalyst DCT-1 was reduced to 260°C, the hydrogen gas pressure was adjusted to 5.0 MPa, the flow rate of hydrogen gas was 200.0 mL/min, TQ-1 was introduced into the reaction tube, the flow rate was 30.0 mL/h, and the treatment time was 9 hours. The prepared catalyst was denoted as DCT-2.

### Comparative Example C3

The preparation procedure of the sulfided-state hydrogenation catalyst SCT-0 was the same as that in Example C1.

2,000.0g of toluene, 35.0 g of magnesium tetraphenylporphyrin, and 50.0 g of diethanolamine were taken to formulate an organic solution containing magnesium, which was denoted as DGQ-3.

The temperature of the reaction tube loaded with the catalyst SCT-0 was reduced to 110°C, the pressure was adjusted to 0.4 MPa, the gas flow rate was 100.0 mL/min, DGQ-3 was introduced into the reaction tube, the flow rate was 80.0 mL/h, and the treatment time was 10.0 hours. The prepared catalyst was denoted as DCT-3.

### Comparative Example C4

The preparation procedure of the catalyst DCT-1 was the same as that in Comparative Example C1.

2,000.0g of toluene, 35.0 g of magnesium tetraphenylporphyrin, and 50.0 g of diethanolamine were taken to formulate an organic solution containing magnesium, which was denoted as DGQ-4.

The temperature of the reaction tube loaded with the catalyst DCT-1 was reduced to 260°C, the hydrogen gas pressure was adjusted to 5.0 MPa, the flow rate of hydrogen gas was 200.0 mL/min, and the treatment time was 9 hours. The prepared catalyst was denoted as DTCT-4.

The temperature of the reaction tube was reduced to 110°C, the pressure was adjusted to 0.4 MPa, the gas flow rate was 100.0 mL/min, DGQ-4 was introduced into the reaction tube, the flow rate was 80.0 mL/h, and the treatment time was 10.0 hours. The prepared catalyst was denoted as DCT-4.

### Comparative Example C5

The preparation procedure of the carrier S-0 was the same as that in Example C1.

40.0 g of ammonium heptamolybdate tetrahydrate, 25.0 g of nickel nitrate hexahydrate, 15.0 g of anhydrous magnesium nitrate, and 150.0 g of deionized water were weighed, and subsequently fully stirred at 80°C for 30 min, cooled to room temperature, and then diluted with deionized water to reach a constant volume of 210.0 mL, the obtained solution was denoted as DQ-5.

200 g of the carrier S-0 was taken, impregnated with the solution DQ-5, naturally dried in the air for 24 hours, and then subjected to drying at 120°C for 4 hours and calcinated at 420°C for 4.0 hours, the prepared oxidation state hydrogenation catalyst was denoted as DCT-0.

20.0 g of oxidation state hydrogenation catalyst DCT-0 was put into a reaction tube, and sulfurized with the sulfurization liquid SQ-0 (same as that in Example 1), during the sulfurization process, the pressure of hydrogen gas was 6.0 MPa, the flow rate of hydrogen gas was 300.0 mL/min, the flow rate of said sulfurization liquid SQ-0 was 40.0 mL/h, the sulfurization temperature was 350°C, the sulfurization time was 6 hours, and the prepared sulfided-state hydrogenation catalyst was marked as DCT-5.

The composition of the aforementioned catalysts was shown in Table C1.

**Table C1 Physicochemical compositions of the catalysts prepared in Examples and Comparative Examples**

| Catalyst No. | Mo, wt% | Ni, wt% | Mg, wt% | S, wt% |
|---|---|---|---|---|
| ECT-1 | 8.3 | 2.03 | 1.33 | 5.55 |
| ECT-2 | 8.4 | 2.02 | 1.49 | 5.24 |
| ECT-3 | 8.4 | 2.06 | 1.68 | 5.35 |
| ECT-4 | 8.2 | 2.04 | 1.65 | 5.37 |
| ECT-5 | 8.3 | 2.05 | 1.60 | 5.23 |
| DCT-1 | 8.2 | 2.01 | - | 6.19 |
| DCT-2 | 8.2 | 2.05 | - | 5.46 |
| DCT-3 | 8.4 | 2.03 | 1.59 | 6.24 |
| DCT-4 | 8.2 | 2.02 | 1.65 | 3.26 |
| DCT-5 | 8.4 | 2.0 | 1.62 | 6.11 |

The Mg-modified hydrogenation catalysts were characterized by TEM-EDS to obtain the percentage of the content of Mg distributed in the Ni-Mo-S active phase region relative to the total Mg content and the percentage of the content of sulfur at the edge and corner sites of the Ni-Mo-S active phase relative to the total sulfur content of the Ni-Mo-S active phase. The specific details were shown in Table C2.

**Table C2**

| Catalyst No. | ECT-1 | ECT-2 | ECT-3 | ECT-4 | ECT-5 | DCT-1 | DCT-2 | DCT-3 | DCT-4 | DCT-5 |
|---|---|---|---|---|---|---|---|---|---|---|
| Mg-Ni-Mo-S/Mgₜₒₜₐₗ, % | 79 | 77 | 73 | 79 | 76 | - | - | 16 | 48 | 19 |
| S_{edge and corner sites}/Sₜₒₜₐₗ, % | 4.0 | 4.3 | 4.5 | 4.0 | 3.9 | 12.6 | 3.8 | 11.9 | 8.6 | 12.2 |

### Test Example C1

The catalysts prepared in Examples C1-C5 were subjected to the activity evaluation, and the properties of feedstock oil were shown in Table C3. The feedstock oil was evaluated for hydrogenation under the following conditions: the reaction temperature was 320°C, the reaction pressure was 8.0MPa, the liquid hourly space velocity was 2.5 h⁻¹, hydrogen/oil volume ratio was 800: 1. After the evaluation of the catalysts for 1,000 hours, the evaluation results were illustrated in Table C4.

### Comparative Test Example C1

The catalysts prepared in Comparative Examples C1-C5 were subjected to the activity evaluation, and the properties of feedstock oil were shown in Table C3. The feedstock oil was evaluated for hydrogenation under the following conditions: the reaction temperature was 320°C, the reaction pressure was 8.0MPa, the liquid hourly space velocity was 2.5 h⁻¹, hydrogen/oil volume ratio was 800: 1. After the evaluation of the catalysts for 1,000 hours, the evaluation results were illustrated in Table C4.

**Table C3 Properties of coal-made synthetic oil**

| Feedstock oil name | Heavy synthetic oil |
|---|---|
| Density (20°C), kg.m⁻³ | 0.7877 |
| Sulfur, µg.g⁻¹ | 281 |
| Nitrogen, µg.g⁻¹ | 16.5 |
| C, wt% | 83.84 |
| H, wt% | 12.51 |
| O, wt% | 2.91 |
| Alkane, wt% | 62.1 |
| Olefin, wt% | 31.5 |
| Aromatic hydrocarbons, wt% | 6.4 |
| Freezing point, °C | 31 |
| Acid value (potentiometric titration method) /mgKOH•g⁻¹ | 1.51 |

**Table C4 Evaluation results**

| Catalysts | Acid value /(mgKOH)·g⁻¹ | Paraffin, wt% | Olefin, wt% | Aromatic hydrocarbons, wt% | S/µg·g⁻¹ | N/µg·g⁻¹ |
|---|---|---|---|---|---|---|
| ECT-1 | 0.18 | 95.8 | 1.95 | 2.16 | 12.5 | 1.1 |
| ECT-2 | 0.14 | 96.7 | 1.53 | 1.76 | 10.6 | 0.8 |
| ECT-3 | 0.11 | 97.1 | 1.43 | 1.41 | 9.1 | 0.4 |
| ECT-4 | 0.13 | 97.0 | 1.34 | 1.51 | 8.6 | 0.5 |
| ECT-5 | 0.11 | 96.9 | 1.39 | 1.43 | 9.5 | 0.4 |
| DCT-1 | 0.51 | 86.3 | 9.52 | 4.10 | 59.9 | 5.1 |
| DCT-2 | 0.43 | 87.5 | 8.62 | 3.62 | 31.5 | 4.3 |
| DCT-3 | 0.31 | 90.5 | 5.98 | 3.51 | 39.4 | 2.2 |
| DCT-4 | 0.35 | 90.2 | 6.02 | 3.65 | 41.8 | 2.9 |
| DCT-5 | 0.37 | 90.0 | 6.11 | 3.82 | 42.0 | 2.7 |

As can be seen from the evaluation results of Table C4, the Mg-modified hydrogenation catalysts produced with the preparation method of the invention have desirable hydrogenation activity, and excellent hydrogenation saturation performance on olefins, but also exhibit good stability.

Each of the following oxidation state hydrogenation catalysts used in Examples D1-D5 and Comparative Examples D1-D5 was produced with the following preparation method:

1,000.0g of alumina dry glue powder was weighed, 10.0g of citric acid, and 30.0g of sesbania powder were added and uniformly mixed, 1,000.0g of an aqueous solution containing 0.5% by mass of nitric acid was added, and ground for 10.0 min, and then subjected to strip extrusion by using a clover orifice plate having a diameter of 2.0 mm. The strips were dried at 120°C for 6.0 hours, and then calcinated at 800°C for 6.0 hours. The calcinated carrier was denoted as S-0 (upon analysis and detection, the carrier had a specific surface area of 271 m²/g and a pore volume of 0.93 cm³/g).

50.0 g of ammonium heptamolybdate tetrahydrate, 30.0 g of nickel nitrate hexahydrate, and 150.0 g of deionized water were weighed, and subsequently fully stirred at 60°C for 30 min, cooled to room temperature, and then diluted with deionized water to reach a constant volume of 200.0 mL, the obtained solution was denoted as Q-0.

200 g of the carrier S-0 was taken, impregnated with the solution Q-0, naturally dried in the air for 24 hours, and then subjected to drying at 120°C for 4 hours and calcinated at 480°C for 4.0 hours, the prepared oxidation state hydrogenation catalyst was denoted as CT-0 (the content of the carrier was 72.1%, the content of molybdenum calculated in terms of oxide was 24.9%, and the content of nickel calculated in terms of oxide was 3.0%, based on the weight of the catalyst).

### Example D1

1,000 g of cyclohexane and 50.0 g of dimethyl disulfide were taken to formulate a sulfurization liquid marked as SQ-0.

1,000 g of cyclohexane and 2.0 g of dimethyl disulfide were taken to formulate a sulfurization liquid labeled TQ-1.

1,000 g of cyclohexane, 25.0 g of zinc glycerolate, and 60.0g of monoethanolamine were taken to formulate an organic solution containing zinc, which was denoted as ZQ-1.

20.0g of oxidation state hydrogenation catalyst CT-0 was put into a reaction tube, and initial sulfurization was performed with SQ-0, during the sulfurization process, the pressure of hydrogen gas was 6.0 MPa, and the flow rate of hydrogen gas was 300.0 mL/min, the flow rate of the sulfurization liquid SQ-0 was 40.0 mL/h, the sulfurization temperature was 350°C, the sulfurization time was 6 hours, and the catalyst after sulfurization was marked as SCT-0.

The temperature of the reaction tube was reduced to 260°C, the pressure of hydrogen gas was adjusted to 5.0 MPa, the flow rate of hydrogen gas was 200.0 mL/min, TQ-1 was introduced into the reaction tube, the flow rate was 30.0 mL/h, and the treatment time was 9 hours. The prepared catalyst was denoted as TCT-1.

The temperature of the reaction tube was reduced to 140°C, the pressure of hydrogen gas was adjusted to 3.0 MPa, the flow rate of hydrogen gas was 120.0 mL/min, the organic solution ZQ-1 was introduced into the reaction tube, the flow rate was 80.0 mL/h, and the treatment time was 3.0 hours. The prepared catalyst was marked as ECT-1.

### Example D2

The preparation procedures of carrier S-0, solution Q-0, oxidation state hydrogenation catalyst CT-0, sulfurization liquid SQ-0, and suflided-state catalyst SCT-0 were the same as those in Example D1.

1,000 g of cyclohexane and 3.0 g of dimethyl disulfide were taken to formulate a sulfurization liquid labeled TQ-2.

1,000 g of toluene, 30.0g of zinc glycerolate, and 60.0g of monoethanolamine were taken to formulate an organic solution containing zinc, which was denoted as ZQ-2.

The temperature of the reaction tube was reduced to 280°C, the pressure of hydrogen gas was adjusted to 6.0 MPa, the flow rate of hydrogen gas was 300.0 mL/min, TQ-2 was introduced into the reaction tube, the flow rate was 40.0 mL/h, and the treatment time was 12 hours. The prepared catalyst was denoted as TCT-2.

The temperature of the reaction tube was reduced to 160°C, the pressure was adjusted to 4 MPa, the flow rate of hydrogen gas was 150.0 mL/min, ZQ-2 was introduced into the reaction tube, the flow rate was 100.0 mL/h, and the treatment time was 4.0 hours. The prepared catalyst was marked as ECT-2.

### Example D3

The preparation procedures of carrier S-0, solution Q-0, oxidation state hydrogenation catalyst CT-0, sulfurization liquid SQ-0, and suflided-state catalyst SCT-0 were the same as those in Example D1.

1,000 g of cyclohexane and 4.0 g of dimethyl disulfide were taken to formulate a sulfurization liquid labeled TQ-2.

1,000 g of toluene, 40.0 g of zinc glycerolate, and 60.0g of monoethanolamine were taken to formulate an organic solution containing zinc, which was denoted as ZQ-3.

The temperature of the reaction tube was reduced to 300°C, the pressure of hydrogen gas was adjusted to 10.0 MPa, the flow rate of hydrogen gas was 400.0 mL/min, TQ-3 was introduced into the reaction tube, the flow rate was 40.0 mL/h, and the treatment time was 12 hours. The prepared catalyst was denoted as TCT-3.

The temperature of the reaction tube was reduced to 190°C, the pressure was adjusted to 5.0 MPa, the flow rate of hydrogen gas was 180.0 mL/min, ZQ-3 was introduced into the reaction tube, the flow rate was 120.0 mL/h, and the treatment time was 5.0 hours. The prepared catalyst was marked as ECT-3.

### Example D4

The preparation procedures of carrier S-0, solution Q-0, oxidation state hydrogenation catalyst CT-0, sulfurization liquid SQ-0, and suflided-state catalyst SCT-0 were the same as those in Example D1.

The temperature of the reaction tube was reduced to 280°C, the reaction pressure was adjusted to 6.0 MPa, the mixed gas of hydrogen gas and hydrogen sulfide was introduced into the reaction tube, the volume ratio of the hydrogen gas to the hydrogen sulfide was 350:1, the total flow rate of the mixed gas was 350 mL/min, the treatment time was 12 hours. The prepared catalyst was denoted as TCT-4.

The temperature of the reaction tube was reduced to 140°C, the pressure of hydrogen gas was adjusted to 3.0 MPa, the flow rate of hydrogen gas was 120.0 mL/min, ZQ-1 was introduced into the reaction tube, the flow rate was 80.0 mL/h, and the treatment time was 3.0 hours. The prepared catalyst was marked as ECT-4.

### Example D5

The preparation procedures of carrier S-0, solution Q-0, oxidation state hydrogenation catalyst CT-0, sulfurization liquid SQ-0, and suflided-state catalyst SCT-0 were the same as those in Example D1.

The temperature of the reaction tube was reduced to 300°C, the reaction pressure was adjusted to 6.0 MPa, the mixed gas of hydrogen gas and hydrogen sulfide was introduced into the reaction tube, the volume ratio of the hydrogen gas to the hydrogen sulfide was 450: 1, the total flow rate of the mixed gas was 450 mL/min, the treatment time was 12 hours. The prepared catalyst was denoted as TCT-5.

The temperature of the reaction tube was reduced to 140°C, the pressure of hydrogen gas was adjusted to 3.0 MPa, the flow rate of hydrogen gas was 120.0 mL/min, ZQ-1 was introduced into the reaction tube, the flow rate was 80.0 mL/h, and the treatment time was 3.0 hours. The prepared catalyst was marked as ECT-5.

### Comparative Example D1

20.0g of CT-0 was put into a reaction tube, and sulfurized with the sulfurization liquid SQ-0, during the sulfurization process, the pressure of hydrogen gas was 6.0 MPa, the flow rate of hydrogen gas was 300.0 mL/min, the flow rate of said sulfurization liquid SQ-0 was 40.0 mL/h, the sulfurization temperature was 350°C, the sulfurization time was 6 hours, and the sulfided catalyst was marked as DCT-1.

### Comparative Example D2

The preparation procedure of the catalyst DCT-1 was the same as that in Comparative Example D1.

The temperature of the reaction tube loaded with the catalyst DCT-1 was reduced to 260°C, the hydrogen gas pressure was adjusted to 5.0 MPa, the flow rate of hydrogen gas was 200.0 mL/min, TQ-1 was introduced into the reaction tube, the flow rate was 30.0 mL/h, and the treatment time was 9 hours. The prepared catalyst was denoted as DCT-2.

### Comparative Example D3

The preparation procedure of the sulfided-state hydrogenation catalyst SCT-0 was the same as that in Example D1.

The temperature of the reaction tube loaded with the catalyst SCT-0 was reduced to 140°C, the pressure was adjusted to 3.0 MPa, the flow rate of hydrogen gas was 120.0 mL/min, the organic solution ZQ-1 was introduced into the reaction tube, the flow rate was 80.0 mL/h, and the treatment time was 3.0 hours. The prepared catalyst was denoted as DCT-3.

### Comparative Example D4

The preparation procedure of the sulfided-state hydrogenation catalyst DCT-1 was the same as that in Example D1.

The temperature of the reaction tube loaded with the catalyst DCT-1 was reduced to 260°C, the hydrogen gas pressure was adjusted to 5.0 MPa, the flow rate of hydrogen gas was 200.0 mL/min, and the treatment time was 9 hours. The prepared catalyst was denoted as DTCT-4.

The temperature of the reaction tube was reduced to 140°C, the pressure was adjusted to 3.0 MPa, the gas flow rate was 120.0 mL/min, ZQ-1 was introduced into the reaction tube, the flow rate was 80.0 mL/h, and the treatment time was 3.0 hours. The prepared catalyst was denoted as DCT-4.

### Comparative Example D5

The preparation procedure of the carrier S-0 was the same as that in Example D1.

50.0 g of ammonium heptamolybdate tetrahydrate, 30.0 g of nickel nitrate hexahydrate, 80.0 g of anhydrous zinc nitrate, and 150.0 g of deionized water were weighed, and subsequently fully stirred at 60°C for 30 min, cooled to room temperature, and then diluted with deionized water to reach a constant volume of 200.0 mL, the obtained solution was denoted as DQ-5.

200 g of the carrier S-0 was taken, impregnated with the solution DQ-5, naturally dried in the air for 24 hours, and then subjected to drying at 120°C for 4 hours and calcinated at 420°C for 4.0 hours, the prepared oxidation state hydrogenation catalyst was denoted as DCT-0.

20.0 g of DCT-0 was put into a reaction tube, an initial sulfurization was performed by using SQ-0 (same as that in Example D1), during the sulfurization process, the pressure of hydrogen gas was 6.0 MPa, the flow rate of hydrogen gas was 300.0 mL/min, the flow rate of said sulfurization liquid SQ-0 was 40.0 mL/h, the sulfurization temperature was 350°C, the sulfurization time was 6 hours, and the prepared sulfided-state hydrogenation catalyst was marked as DCT-5.

The composition of the aforementioned catalysts was shown in Table D1.

**Table D1 Physicochemical compositions of the catalysts prepared in the Examples and Comparative Examples**

| Catalyst No. | Mo, wt% | Ni, wt% | Zn, wt% | S, wt% |
|---|---|---|---|---|
| ECT-1 | 10.8 | 2.6 | 1.15 | 6.9 |
| ECT-2 | 10.9 | 2.6 | 1.24 | 6.8 |
| ECT-3 | 10.5 | 2.5 | 1.32 | 7.1 |
| ECT-4 | 10.6 | 2.6 | 1.21 | 6.7 |
| ECT-5 | 10.8 | 2.5 | 1.37 | 6.9 |
| DCT-1 | 10.5 | 2.7 | - | 7.6 |
| DCT-2 | 10.6 | 2.7 | - | 6.9 |
| DCT-3 | 10.3 | 2.5 | 1.30 | 3.8 |
| DCT-4 | 10.5 | 2.6 | 1.35 | 8.0 |
| DCT-5 | 10.7 | 2.6 | 1.32 | 7.8 |

The Zn-modified hydrodesulfurization catalysts were characterized by TEM-EDS to obtain the percentage of the content of Zn distributed in the Ni-Mo-S active phase region relative to the total Zn content and the percentage of the content of sulfur at the edge and corner sites of the Ni-Mo-S active phase relative to the total sulfur content of the Ni-Mo-S active phase. The specific details were shown in Table D2.

**Table D2**

| Catalyst No. | ECT-1 | ECT-2 | ECT-3 | ECT-4 | ECT-5 | DCT-1 | DCT-2 | DCT-3 | DCT-4 | DCT-5 |
|---|---|---|---|---|---|---|---|---|---|---|
| Zn-Ni-Mo-S /Zn ₜₒₜₐₗ, % | 86 | 83 | 81 | 85 | 88 | - | - | 23 | 56 | 26 |
| S edge and cornerₛᵢₜₑₛ /S ₜₒₜₐₗ, **%** | 3.2 | 3.1 | 3.3 | 3.1 | 3.0 | 9.3 | 2.9 | 8.9 | 5.1 | 9.2 |

### Test Example D1

The catalysts prepared in Examples D1-D5 were subjected to the activity evaluation, and the properties of deasphalted oil were shown in Table D3. A fixed bed process was adopted, and a hydrogenation protective agent (FZC-100B) was filled before said catalysts, wherein the filling volume ratio of the protective agent to the hydrodenitrogenation catalysts obtained in the Examples was 1: 4. The operating conditions were as follows: the reaction temperature was 385°C, the reaction pressure was 18.0MPa, hydrogen/oil volume ratio was 800: 1, the liquid hourly space velocity was 0.15 h⁻¹. After the reaction for 2,000 hours, the residual carbon value, the sulfur content, and the nitrogen content in the distillation cut at a temperature of not less than 200°C of the hydrogenated oil product were analyzed, the results were illustrated in Table D4.

### Comparative Test Example D1

The catalysts prepared in Comparative Examples D1-D5 were subjected to the activity evaluation, and the properties of deasphalted oil were shown in Table D3. A fixed bed process was adopted, and a hydrogenation protective agent (FZC-100B) was filled before loading the catalysts, wherein the filling volume ratio of the protective agent to the hydrodenitrogenation catalysts obtained in the Examples was 1: 4. The operating conditions were as follows: the reaction temperature was 385°C, the reaction pressure was 18.0MPa, hydrogen/oil volume ratio was 800: 1, the liquid hourly space velocity was 0.15 h⁻¹. After the reaction for 2,000 hours, the residual carbon value, the sulfur content, and the nitrogen content in the distillation cut at a temperature of not less than 200°C of the hydrogenated oil product were evaluated and analyzed, the results were illustrated in Table D4.

**Table D3 Properties of deasphalted oils**

| | |
|---|---|
| Density, kg/m³ | 962 |
| Vanadium + Nickel content, µg/g | 51.0 |
| Sulfur content, µg/g | 36185 |
| Nitrogen content, µg/g | 2514 |
| Saturation fraction, wt% | 43.9 |
| Fragrance fraction, wt% | 39.1 |
| Colloid, wt% | 16.6 |
| Asphaltenes, wt% | 0.4 |
| Residual carbon value, wt% | 11.2 |

**Table D4 Evaluation results**

| | Catalyst No. | Sulfur content, µg/g | Nitrogen content, µg/g | Residual carbon value, wt% |
|---|---|---|---|---|
| Example D1 | ECT-1 | 1422 | 756 | 1.4 |
| Example D2 | ECT-2 | 1324 | 721 | 1.6 |
| Example D3 | ECT-3 | 1260 | 719 | 1.5 |
| Example D4 | ECT-4 | 1198 | 814 | 1.3 |
| Example D5 | ECT-5 | 1249 | 745 | 1.4 |
| Comparative Example D1 | DCT-1 | 4267 | 1524 | 3.8 |
| Comparative Example D2 | DCT-2 | 5563 | 1771 | 5.1 |
| Comparative Example D3 | DCT-3 | 2394 | 1067 | 2.5 |
| Comparative Example D4 | DCT-4 | 3510 | 1452 | 4.2 |
| Comparative Example D5 | DCT-5 | 2851 | 1593 | 2.9 |

As can be seen from the evaluation results in Table D4, the hydrodesulfurization catalysts prepared by the invention not only have excellent hydrodesulfurization capability but also exhibit desirable hydrodenitrogenation capability and the hydrodecarbonization capability.

Each of the following oxidation state hydrogenation catalysts used in Examples E1-E5 and Comparative Examples E1-E5 was produced with the following preparation method:

1,000.0g of alumina dry glue powder was weighed, 20.0g of citric acid, and 20.0g of sesbania powder were added and uniformly mixed, 1,000.0g of an aqueous solution containing 1.0% by mass of nitric acid was added, and ground for 20.0 min, and then subjected to strip extrusion by using a clover orifice plate having a diameter of 1.8 mm. The strips were dried at 120°C for 6.0 hours, and then calcinated at 700°C for 6.0 hours. The calcinated carrier was denoted as S-0 (upon analysis, the carrier had properties as follows: a specific surface area of 270 m²/g and a pore volume of 0.9 cm³/g). 74.2 g of ammonium heptamolybdate tetrahydrate, 47.3 g of nickel nitrate hexahydrate, and 150.0 g of deionized water were weighed, and subsequently fully stirred at 60°C for 20 min, cooled to room temperature, and then diluted with deionized water to reach a constant volume of 200.0 mL, the obtained solution was denoted as Q-0.

200 g of the carrier S-0 was taken, impregnated with the solution Q-0, naturally dried in the air for 24 hours, and then subjected to drying at 120°C for 4 hours and calcinated at 450°C for 5.0 hours, the prepared oxidation state hydrogenation catalyst was denoted as CT-0 (the content of the carrier was 73.3%, the content of molybdenum calculated in terms of oxide was 22.2%, and the content of nickel calculated in terms of oxide was 4.5%, based on the weight of the catalyst).

### Example E1

1,000 g of cyclohexane and 50.0 g of dimethyl disulfide were taken to formulate a sulfurization liquid marked as SQ-0.

1,000 g of cyclohexane and 2.0 g of dimethyl disulfide were taken to formulate a sulfurization liquid labeled TQ-1.

20.0g of CT-0 was put into a reaction tube, and the sulfurization treatment was performed with SQ-0, during the sulfurization process, the pressure of hydrogen gas was 6.0 MPa, the flow rate of hydrogen gas was 300.0 mL/min, the flow rate of the sulfurization liquid SQ-0 was 40.0 mL/h, the sulfurization temperature was 350°C, the sulfurization time was 6 hours, and the prepared sulfided-state hydrogenation catalyst was marked as SCT-0.

The temperature of the reaction tube was reduced to 260°C, the pressure of hydrogen gas was adjusted to 5.0 MPa, the flow rate of hydrogen gas was 200.0 mL/min, TQ-1 was introduced into the reaction tube, the flow rate was 30.0 mL/h, and the treatment time was 9 hours. The prepared catalyst was denoted as TCT-1.

The temperature of the reaction tube was reduced to 160°C, the pressure was adjusted to 5.0 MPa, and the mixed gas of hydrogen gas and hydrogen selenide was introduced into the reaction tube, wherein the volume fraction of the hydrogen gas in the mixed gas was 95%, the volume fraction of the hydrogen selenide was 5%, the flow rate of the mixed gas was 300.0 mL/min, and the treatment time is 3.0 hours. The prepared catalyst was marked as ECT-1.

### Example E2

The process for preparing the sulfided-state hydrogenation catalyst SCT-0 was the same as that in Example E1.

1,000 g of cyclohexane and 3.0 g of carbon disulfide were taken to formulate a sulfurization liquid labeled TQ-2.

The temperature of the reaction tube loaded with the sulfided-state hydrogenation catalyst SCT-0 was reduced to 280°C, the pressure of hydrogen gas was adjusted to 6.0 MPa, the flow rate of hydrogen gas was 300.0 mL/min, TQ-2 was introduced into the reaction tube, the flow rate was 40.0 mL/h, and the treatment time was 12 hours. The prepared catalyst was denoted as TCT-2.

The temperature of the reaction tube was reduced to 180°C, the pressure was adjusted to 8.0 MPa, the mixed gas of hydrogen gas and hydrogen selenide was introduced into the reaction tube, wherein the volume fraction of the hydrogen gas in the mixed gas was 93%, the volume fraction of the hydrogen selenide was 7%, the flow rate of the mixed gas was 400.0 mL/min, and the treatment time is 4.0 hours. The prepared catalyst was marked as ECT-2.

### Example E3

The process for preparing the sulfided-state hydrogenation catalyst SCT-0 was the same as that in Example E1.

1,000 g of cyclohexane and 4.0 g of dimethyl sulfoxide were taken to formulate a sulfurization liquid labeled TQ-3.

The temperature of the reaction tube loaded with the sulfided-state hydrogenation catalyst SCT-0 was reduced to 300°C, the pressure of hydrogen gas was adjusted to 10.0 MPa, the flow rate of hydrogen gas was 400.0 mL/min, TQ-3 was introduced into the reaction tube, the flow rate was 40.0 mL/h, and the treatment time was 12 hours. The prepared catalyst was denoted as TCT-3.

The temperature of the reaction tube was reduced to 200°C, the pressure was adjusted to 7.0 MPa, the mixed gas of hydrogen gas and hydrogen selenide was introduced into the reaction tube, wherein the volume fraction of the hydrogen gas in the mixed gas was 90%, the volume fraction of the hydrogen selenide was 10%, the flow rate of the mixed gas was 500.0 mL/min, and the treatment time is 5.0 hours. The prepared catalyst was marked as ECT-3.

### Example E4

The process for preparing the sulfided-state hydrogenation catalyst SCT-0 was the same as that in Example E1.

The temperature of the reaction tube loaded with the sulfided-state hydrogenation catalyst SCT-0 was reduced to 270°C, the reaction pressure was adjusted to 6.0 MPa, the mixed gas of hydrogen gas and hydrogen sulfide was introduced into the reaction tube, wherein the partial pressure ratio of the hydrogen gas to the hydrogen sulfide was 400:1, the flow rate of the mixed gas was 400.0 mL/min, and the treatment time was 12 hours. The prepared catalyst was denoted as TCT-4.

The temperature of the reaction tube was reduced to 180°C, the reaction pressure was adjusted to 8.0 MPa, the mixed gas of hydrogen gas and hydrogen selenide was introduced into the reaction tube, wherein the volume fraction of the hydrogen gas in the mixed gas was 93%, the volume fraction of the hydrogen selenide was 7%, the flow rate of the mixed gas was 500.0 mL/min, and the treatment time is 4.0 hours. The prepared catalyst was marked as ECT-4.

### Example E5

The process for preparing the sulfided-state hydrogenation catalyst SCT-0 was the same as that in Example E1.

The temperature of the reaction tube loaded with the sulfided-state hydrogenation catalyst SCT-0 was reduced to 250°C, the reaction pressure was adjusted to 6.0 MPa, the mixed gas of hydrogen gas and hydrogen sulfide was introduced into the reaction tube, wherein the partial pressure ratio of the hydrogen gas to the hydrogen sulfide was 400:1, the flow rate of the mixed gas was 400.0 mL/min, and the treatment time was 12 hours. The prepared catalyst was denoted as TCT-5.

The temperature of the reaction tube was reduced to 210°C, the pressure was adjusted to 7.0 MPa, the mixed gas of hydrogen gas and hydrogen selenide was introduced into the reaction tube, wherein the volume fraction of the hydrogen gas in the mixed gas was 88%, the volume fraction of the hydrogen selenide was 12%, the flow rate of the mixed gas was 300.0 mL/min, and the treatment time is 5.0 hours. The prepared catalyst was marked as ECT-5.

### Comparative Example E1

20.0g of CT-0 was put into a reaction tube, and sulfurized with the sulfurization liquid SQ-0, during the sulfurization process, the pressure of hydrogen gas was 6.0 MPa, the flow rate of hydrogen gas was 300.0 mL/min, the flow rate of said sulfurization liquid SQ-0 was 40.0 mL/h, the sulfurization temperature was 350°C, the sulfurization time was 6.0 hours, and the sulfided catalyst was marked as DCT-1.

### Comparative Example E2

The preparation procedure of the catalyst DCT-1 was the same as that in Comparative Example E1.

The temperature of the reaction tube loaded with the catalyst DCT-1 was reduced to 260°C, the hydrogen gas pressure was adjusted to 5.0 MPa, the flow rate of hydrogen gas was 200.0 mL/min, TQ-1 was introduced into the reaction tube, the flow rate was 30.0 mL/h, and the treatment time was 9 hours. The prepared catalyst was denoted as DCT-2.

### Comparative Example E3

The preparation procedure of the sulfided-state hydrogenation catalyst SCT-0 was the same as that in Example E1.

The temperature of the reaction tube loaded with the catalyst SCT-0 was reduced to 180°C, the hydrogen gas pressure was adjusted to 8.0 MPa, the mixed gas of hydrogen gas and hydrogen selenide was introduced into the reaction tube, wherein the volume fraction of the hydrogen gas was 93%, the volume fraction of the hydrogen selenide was 7%, the gas flow rate was 400.0 mL/min, the treatment time was 4.0 hours. The prepared catalyst was denoted as DCT-3.

### Comparative Example E4

The preparation procedure of the catalyst DCT-1 was the same as that in Example E1.

The temperature of the reaction tube loaded with the catalyst DCT-1 was reduced to 260°C, the hydrogen gas pressure was adjusted to 5.0 MPa, the flow rate of hydrogen gas was 200.0 mL/min, and the treatment time was 9 hours. The prepared catalyst was denoted as DTCT-4.

The temperature of the reaction tube was reduced to 160°C, the pressure was adjusted to 5.0 MPa, the mixed gas of hydrogen gas and hydrogen selenide was introduced into the reaction tube, wherein the volume fraction of the hydrogen gas was 95%, the volume fraction of the hydrogen selenide was 5%, the gas flow rate was 300.0 mL/min, the treatment time was 3.0 hours. The prepared catalyst was denoted as DCT-4.

### Comparative Example E5

20.0g of CT-0 was put into a reaction tube, and a mixed gas of hydrogen and hydrogen selenide was introduced into the reaction tube, wherein the volume fraction of the hydrogen gas was 90%, the volume fraction of the hydrogen selenide was 10%, the reaction temperature was 200°C, the reaction pressure was 7.0 MPa, the flow rate of the mixed gas was 500.0 mL/min, and the treatment time was 5.0 hours. The prepared catalyst was marked as DCT-5.

The composition of the aforementioned catalysts was shown in Table E1.

**Table E1 Physicochemical compositions of the catalysts prepared in the Examples and Comparative Examples**

| Catalyst No. | Mo, wt% | Ni, wt% | Se, wt% | S, wt% |
|---|---|---|---|---|
| ECT-1 | 13.9 | 3.30 | 2.29 | 8.61 |
| ECT-2 | 14.1 | 3.28 | 2.41 | 8.56 |
| ECT-3 | 13.8 | 3.27 | 2.66 | 8.51 |
| ECT-4 | 14.3 | 3.25 | 2.57 | 8.46 |
| ECT-5 | 14.1 | 3.18 | 2.70 | 8.37 |
| DCT-1 | 14.1 | 3.29 | - | 9.70 |
| DCT-2 | 14.0 | 3.21 | - | 8.68 |
| DCT-3 | 14.1 | 3.18 | 1.26 | 9.39 |
| DCT-4 | 14.0 | 3.17 | 4.68 | 4.65 |
| DCT-5 | 13.9 | 3.28 | 17.67 | - |

The hydrodecarbonization catalysts were characterized by TEM-EDS to obtain the percentage of the content of Se distributed in the Ni-Mo-S active phase region relative to the total Se content and the percentage of the content of sulfur at the edge and corner sites of the Ni-Mo-S active phase relative to the total sulfur content of the Ni-Mo-S active phase. The specific details were shown in Table E2.

**Table E2**

| | | | | | | | | | |
|---|---|---|---|---|---|---|---|---|---|
| Catalyst No. | ECT-1 | ECT-2 | ECT-3 | ECT-4 | ECT-5 | DCT-1 | DCT-2 | DCT-3 | DCT-4 |
| Se-Ni-Mo-S/ Se ₜₒₜₐₗ, % | 93 | 95 | 94 | 96 | 98 | - | - | 51 | 35 |
| S _{edge and corner sites}/S ₜₒₜₐₗ, % | 2.6 | 2.4 | 2.7 | 2.9 | 2.7 | 9.6 | 3.1 | 5.7 | 6.9 |

### Test Example E1

The catalysts prepared in Examples E1-E5 were subjected to the activity evaluation respectively, and the properties of feedstock resid were shown in Table E3. A fixed bed process was adopted, hydrogenation protective agents (FZC-100B), hydrogenation demetallization catalysts (FZC-204A), and hydrogenation desulfurization catalysts (FZC-33B) were filled before the catalysts, and the filling volume ratio of the protective agents, the hydrogenation demetallization catalysts, the hydrogenation desulfurization catalysts and the catalysts prepared in the Examples was 1.5: 2.0: 2.0: 4.5. The operating conditions were as follows: the reaction temperature was 380°C, the reaction pressure was 16.0MPa, hydrogen/oil volume ratio was 1,200: 1, the liquid hourly space velocity was 0.2 h⁻¹. After the reaction for 2,000 hours, the residual carbon value, the saturation fraction, and the nitrogen content in the distillation cut at a temperature of not less than 200°C of the hydrogenated oil product were evaluated and analyzed, the results were illustrated in Table E4.

### Comparative Test Example E1

The catalysts prepared in Comparative Examples E1-E5 were subjected to the activity evaluation respectively, and the properties of feedstock resid were shown in Table E3. A fixed bed process was adopted, hydrogenation protective agents (FZC-100B), hydrogenation demetallization catalysts (FZC-204A), and hydrogenation desulfurization catalysts (FZC-33B) were filled before the catalysts, and the filling volume ratio of the protective agents, the hydrogenation demetallization catalysts, the hydrogenation desulfurization catalysts and the catalysts prepared in the Comparative Examples was 1.5: 2.0: 2.0: 4.5. The operating conditions were as follows: the reaction temperature was 380°C, the reaction pressure was 16.0MPa, hydrogen/oil volume ratio was 1,200: 1, the liquid hourly space velocity was 0.2 h⁻¹. After the reaction for 2,000 hours, the residual carbon value, the saturation fraction, and the nitrogen content in the distillation cut at a temperature of not less than 200°C of the hydrogenated oil product were evaluated and analyzed, the results were illustrated in Table E4.

**Table E3 Properties of feedstock oil**

| | |
|---|---|
| Density, kg/m³ | 1002 |
| Vanadium + Nickel content, µg/g | 99.8 |
| Sulfur content, µg/g | 39745 |
| Nitrogen content, µg/g | 4153 |
| Saturation fraction, wt% | 37.7 |
| Fragrance fraction, wt% | 29.0 |
| Colloid, wt% | 30.5 |
| Asphaltenes, wt% | 2.8 |
| Residual carbon value, wt% | 19.8 |

**Table E4 Evaluation results of catalysts after hydrogenation for 2,000 h**

| | Catalyst No. | Nitrogen content, µg/g | Residual carbon value, wt% | Saturation fraction, wt% |
|---|---|---|---|---|
| Example E1 | ECT-1 | 952 | 3.1 | 57.4 |
| Example E2 | ECT-2 | 921 | 3.4 | 56.6 |
| Example E3 | ECT-3 | 904 | 2.7 | 58.1 |
| Example E4 | ECT-4 | 895 | 3.0 | 59.3 |
| Example E5 | ECT-5 | 901 | 2.8 | 58.4 |
| Comparative Example E1 | DCT-1 | 1569 | 5.7 | 48.7 |
| Comparative Example E2 | DCT-2 | 1711 | 5.9 | 47.1 |
| Comparative Example E3 | DCT-3 | 1274 | 3.9 | 52.0 |
| Comparative Example E4 | DCT-4 | 1952 | 6.3 | 45.4 |
| Comparative Example E5 | DCT-5 | 2546 | 10.4 | 42.8 |

As can be seen from the evaluation results in Table E4, the catalysts of the invention have excellent capability of hydrodecarbonization, the hydrogenation saturation capability, as well as desirable hydrodenitrogenation capability.

## Claims

1. A hydrogenation catalyst, the hydrogenation catalyst is a sulfided-state hydrogenation catalyst and comprises a carrier, an active component A, an active component B, and a modification aid component, wherein the active component A is at least one selected from the metal elements of group VIII, the active component B is at least one selected from the metal elements of group VIB, and the modification aid component is at least one selected from the elements of groups IB, IIA, IIB, IIIA, and VIA; wherein the hydrogenation catalyst is **characterized by** a TEM-EDS method, and the content of the modification aid component distributed in an A-B-S active phase region accounts for 60%-98%, preferably 75%-98% of the total content of the modification aid component.

2. The hydrogenation catalyst according to claim 1, wherein the hydrogenation catalyst is **characterized by** a TEM-EDS method, and the sulfur content at the edge and corner sites in an A-B-S active phase accounts for 6.0% or less, preferably 0.5%-4.5% of the total sulfur content of the A-B-S active phase.

3. The hydrogenation catalyst according to claim 1, wherein the content of the active component A calculated in terms of element is within the range of 1-10%, preferably within the range of 1.5-6%, the content of the active component B calculated in terms of element is within the range of 6-24%, preferably within the range of 8-18%, based on the mass of the hydrogenation catalyst;
preferably, the content of the modification aid component calculated in terms of element is within the range of 0.2-4%, more preferably within the range of 0.8-4%, based on the mass of the hydrogenation catalyst;
preferably, the content of the sulfur element is within the range of 3-20%, more preferably within the range of 4-15%, based on the mass of the hydrogenation catalyst.

4. The hydrogenation catalyst according to any one of claims 1-3, wherein the active component A is Co and/or Ni, the active component B is Mo and/or W;
preferably, the active component A is Ni, and the active component B is Mo;
preferably, the modification aid component is at least one selected from the group consisting of Cu, Ag, Au, Mg, Ca, Zn, Cd, Ga, and Se, more preferably at least one selected from the group consisting of Ag, Mg, Zn, Ga, and Se;
preferably, the carrier is at least one selected from the group consisting of alumina, silica, and amorphous silica-alumina.

5. A preparation method for the hydrogenation catalyst, the method comprises the following steps:
(1) performing sulfurization on an oxidation state hydrogenation catalyst to obtain a sulfided-state hydrogenation catalyst;
(2) carrying out a desulfurization treatment on the sulfided-state hydrogenation catalyst;
(3) subjecting treated catalyst obtained in step (2) and a material containing a modification aid component precursor to a contact reaction; wherein the modification aid component is at least one selected from the elements of groups IB, IIA, IIB, IIIA, and VIA.

6. The preparation method according to claim 5, wherein the oxidation state hydrogenation catalyst comprises a carrier, an active component A, and an active component B, wherein the active component A is at least one selected from the metal elements of group VIII, and the active component B is at least one selected from the metal elements of group VIB;
preferably, the active component A is Co and/or Ni, the active component B is Mo and/or W;
preferably, the active component A is Ni, and the active component B is Mo;
preferably, the carrier is at least one selected from the group consisting of alumina, silica, and amorphous silica-alumina;
preferably, the content of carrier is 50%-90%, the content of active component B calculated in terms of oxide is 10%-35%, and the content of active component A calculated in terms of oxide is 2% -8%, based on the weight of the oxidation state catalyst.

7. The preparation method according to claim 5 or 6, wherein the sulfurization comprises dry sulfurization and/or wet sulfurization;
preferably, the sulfurization conditions comprise: the sulfurization temperature is within the range of 240-400°C, the sulfurization time is within the range of 2-10h, the pressure of hydrogen gas is within the range of 2-12MPa, and the flow rate of hydrogen gas is 2-25 mL·min⁻¹·g⁻¹ oxidation state hydrogenation catalyst.

8. The preparation method according to any one of claims 5-7, wherein the temperature of the desulfurization treatment in step (2) is lower than the sulfurization temperature, preferably the temperature of the desulfurization treatment is 50-100°C lower than the sulfurization temperature;
preferably, the conditions of the desulfurization treatment comprise: the temperature is within the range of 180-370°C, more preferably within the range of 200-300°C; the treatment time is within the range of 4-24 hours, more preferably within the range of 6-16 hours, and the total pressure is within the range of 2-18MPa, more preferably within the range of 4-15MPa.

9. The preparation method according to any one of claims 5-8, wherein the desulfurization treatment in step (2) is a mild desulfurization treatment, preferably carried out with at least one of the following modes:
(a) performing desulfurization treatment on the sulfided-state hydrogenation catalyst by using the hydrogen gas containing hydrogen sulfide;
(b) performing desulfurization treatment on the sulfided-state hydrogenation catalyst with a sulfurization liquid in the presence of hydrogen gas.

10. The preparation method according to claim 9, wherein the volume ratio of hydrogen sulfide to hydrogen gas in mode (a) is 200:1-800:1, preferably 300:1-600:1, and the total gas flow rate is 5-30 mL·min⁻¹·g⁻¹ oxidation state hydrogenation catalyst, preferably 10-20 mL·min⁻¹·g⁻¹ oxidation state hydrogenation catalyst;
and/or the sulfurization liquid in mode (b) comprises a sulfur-containing compound and an organic solvent, wherein the sulfur-containing compound is at least one selected from the group consisting of dimethyl disulfide, carbon disulfide, diethyl sulfide, ethanethiol, n-butanethiol, di-tert-nonyl polysulfide and dimethyl sulfoxide; the organic solvent is at least one selected from the group consisting of cyclohexane, n-heptane, aviation kerosene and diesel oil;
preferably, the mass fraction of the sulfur-containing compounds in the sulfurization liquid is within the range of 0.1-0.6%;
preferably, the flow rate of the sulfurization liquid during the process of desulfurization treatment is within the range of 0.5-4.5 mL·h⁻¹·g⁻¹ oxidation state hydrogenation catalyst, more preferably within the range of 1-4 mL·h⁻¹·g⁻¹ oxidation state hydrogenation catalyst;
preferably, the flow rate of hydrogen gas during the process of desulfurization treatment is within the range of 5-30 mL·min⁻¹·g⁻¹ oxidation state hydrogenation catalyst, more preferably within the range of 10-20 mL·min⁻¹·g⁻¹ oxidation state hydrogenation catalyst.

11. The preparation method according to any one of claims 5-10, wherein the modification aid component is at least one selected from the group consisting of Cu, Ag, Au, Mg, Ca, Zn, Cd, Ga, and Se, preferably at least one of Ag, Mg, Zn, Ga, and Se;
preferably, the modification aid component precursor is at least one selected from the group consisting of gallium acetylacetonate, triethyl gallium, silver stearate, silver acetylacetonate, silver cyclohexanebutyrate, magnesium stearate, dibutyl magnesium, magnesium pyruvate, magnesium L-aspartate, magnesium tetraphenylporphyrin, zinc naphthenate, zinc glycerolate, diethyl selenium, and hydrogen selenide.

12. The preparation method according to any one of claims 5-11, wherein the material containing the modification aid component precursor is an organic solution containing the modification aid component precursor;
preferably, the mass content of the modification aid component precursor in the organic solution containing the modification aid component precursor is within the range of 0.5-5%;
preferably, the solvent in the organic solution containing the modification aid component precursor is one or more selected from toluene, cyclohexane, decalin, tetrahydronaphthalene, and n-heptane.

13. The preparation method according to claim 12, wherein the organic solution containing modification aid component precursor further comprises a stabilizer selected from the organic alkaline nitrides;
preferably, the stabilizer is at least one selected from the group consisting of triethanolamine, diethanolamine, monoethanolamine, pyridine, quinoline, and aniline;
preferably, the mass content of the stabilizer in the organic solution containing the modification aid component precursor is within the range of 2-8%.

14. The preparation method according to any one of claims 5-13, wherein the conditions of contact reaction in step (3) comprise: the temperature is within the range of 80-220°C, preferably within the range of 100-200°C, the pressure is within the range of 0.2-8MPa, preferably within the range of 0.5-6MPa, the reaction time is within the range of 2-24 hours, preferably within the range of 4-20 hours; the flow rate of hydrogen gas is 2-20 mL·min⁻¹·g⁻¹ oxidation state hydrogenation catalyst, preferably 5-15 mL·min⁻¹·g⁻¹ oxidation state hydrogenation catalyst; the flow rate of the material containing the modification aid component precursor is 2-10 mL·h⁻¹·g⁻¹ oxidation state hydrogenation catalyst, preferably 3-8 mL·h⁻¹·g⁻¹ oxidation state hydrogenation catalyst.

15. The preparation method according to any one of claims 5-11, wherein the material containing the modification aid component precursor is a mixed gas containing the modification aid component precursor, and the mixed gas further comprises hydrogen gas;
preferably, the volume content of the modification aid component precursor in the mixed gas containing the modification aid component precursor is within the range of 1%-20%, more preferably within the range of 3%-15%, and the volume content of the hydrogen gas in the mixed gas containing the modification aid component precursor is within the range of 80% -99%, more preferably within the range of 85% -97%;
preferably, the modification aid component precursor is hydrogen selenide;
preferably, the conditions of contact reaction in step (3) comprise: the temperature is within the range of 120-250°C, more preferably within the range of 150-220°C, the reaction time is within the range of 1-8 hours, more preferably within the range of 2-6 hours; the reaction pressure is within the range of 2-12MPa, more preferably within the range of 4-8MPa, the flow rate of the mixed gas containing the modification aid component precursor is 5-40 mL·min⁻¹·g⁻¹ oxidation state hydrogenation catalyst, more preferably 10-30 mL·min⁻¹·g⁻¹ oxidation state hydrogenation catalyst.

16. Use of the hydrogenation catalyst according to any of claims 1-4 or the hydrogenation catalyst produced with the preparation method according to any of claims 5-15 in the hydrogenation of petroleum products.
